(19) Europäisches Patentamt / European Patent Office / Office européen des brevets

(11) EP 2 002 452 B1

(12) **EUROPEAN PATENT SPECIFICATION**

(45) Date of publication and mention of the grant of the patent:
**29.05.2013 Bulletin 2013/22**

(21) Application number: **07741059.5**

(22) Date of filing: **29.03.2007**

(51) Int Cl.:
*C08J 5/22* (2006.01)
*B29C 41/28* (2006.01)
*C08L 71/10* (2006.01)
*H01M 8/10* (2006.01)
*H01B 1/12* (2006.01)

(86) International application number:
**PCT/JP2007/057623**

(87) International publication number:
**WO 2007/114489 (11.10.2007 Gazette 2007/41)**

(54) **METHOD FOR PRODUCING A SOLID POLYMER ELECTROLYTE MEMBRANE**

VERFAHREN ZUR HERSTELLUNG EINER POLYMERELEKTROLYTMEMBRAN

PROCÉDÉ DE FABRICATION D’UNE MEMBRANE D’ÉLECTROLYTE SOLIDE

(84) Designated Contracting States:
**DE**

(30) Priority:
**30.03.2006 JP 2006092679**
**30.03.2006 JP 2006092678**
**30.03.2006 JP 2006092681**
**30.03.2006 JP 2006092682**

(43) Date of publication of application:
**17.12.2008 Bulletin 2008/51**

(73) Proprietor: **FUJIFILM Corporation**
**Minato-ku**
**Tokyo 106-8620 (JP)**

(72) Inventors:
- **MIYACHI, Hiroshi**
**Minami-ashigara-shi, Kanagawa 250-0193 (JP)**
- **TAKEDA, Ryo**
**Minami-ashigara-shi, Kanagawa 250-0193 (JP)**

(74) Representative: **Grünecker, Kinkeldey, Stockmair & Schwanhäusser**
**Leopoldstrasse 4**
**80802 München (DE)**

(56) References cited:
**WO-A1-2007/007824**
**JP-A- 2003 282 096**
**JP-A- 2004 143 388**
**JP-A- 2005 041 956**
**JP-A- 2005 041 956**
**JP-A- 2005 239 833**
**JP-A- 2005 310 643**
**JP-A- 2007 018 844**

- **DATABASE WPI Week 200581 Thomson Scientific, London, GB; AN 2005-790015 XP002645591, -& JP 2005 310643 A (HONDA MOTOR CO LTD) 4 November 2005 (2005-11-04)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a solid electrolyte membrane, a method and an apparatus for producing the same, membrane electrode assembly and a fuel cell using the solid electrolyte membrane, in particular, the present invention relates to a solid electrolyte membrane having proton conductivity used for the fuel cell, a method and an apparatus for producing the same, membrane electrode assembly and the fuel cell using the solid electrolyte membrane.

Background Art

As a next-generation method for generating electricity which can help solving the environmental pollution problems and energy problems, a fuel cell has been attracting attention. The fuel cell has layered cells (also referred to as membrane electrode assembly (MEA)), and the cells are electrically connected in series. The MEA includes an anode and a cathode which are connected through an external circuit, and a solid electrolyte membrane interposed between the anode and the cathode. A major example of a process to generate electromotive force in the MEA is as follows. At first, a material containing hydrogen atoms is supplied to the cathode, and the hydrogen atoms become protons in the cathode. Next, the protons pass through the solid electrolyte membrane and are bound with oxygen in the anode. Thereby; the electromotive force is generated between the anode and the cathode of the MEA.

Recently, especially a solid electrolyte membrane formed of a polymer (hereinafter called as the organic polymer membrane) attracts attention. Since the organic polymer membrane has a low work temperature and is easy to be reduced in size and weight, the organic polymer membrane is expected to be applied in fuel cells for house hold use, automobile use and the like. For these purposes, the organic polymer membrane needs to have high proton conductivity, high heat resistance and uniformity in these properties.

As a membrane forming method, there are a melt extrusion method and a solution casting method as well known. In the former method, the membrane is produced without using a solvent. However, a polymer is denatured due to heating, and impurities in the polymer material remain in the membrane. On the other hand, the latter method requires a large and complicated facility including a producing apparatus of the solution (dope), a solvent recovery device and the like. However, the latter method requires lower heating temperature compared to the former method, and enables to remove the impurities in the polymer material during a process for producing the solution. Furthermore, in the latter method, a membrane with superior flatness and smoothness, compared to the membrane produced by the former method, can be produced.

Hereinafter, an outline of the solution casting method will be described. At first, a dope containing an organic compound as raw material and solvent is cast onto a support to form a casting membrane. The casting membrane having a self-supporting property is peeled from the support and then dried. Accordingly, the membrane is produced.

In order to produce an organic polymer membrane having excellent quality and heat resistance, for example, Japanese Patent Laid-Open Publication No.9-320617 suggests a method in which a polyvinylidene-fluoride resin is immersed in liquid of a mixture of an electrolyte and a plasticizer. Japanese Patent Laid-Open Publication No. 2001-307752 suggests a method in which a proton conductive membrane is produced by synthesizing an inorganic compound in a solution including an aromatic polymer material having a sulfonic acid group and then removing the solution. In this method, silicon oxide, phosphoric acid derivative and so on are added so as to improve a problem of fine pores. Japanese Patent Laid-Open Publication No.2002-231270 suggests a method in which an ion-exchange membrane is produced by adding a metal-oxide precursor in a solution including an ion-exchange resin, and casting a liquid obtained by hydrolysis and polycondensation of the precursor. Japanese Patent Laid-Open Publication No. 2004-079378 suggests a method in which a proton conductive membrane is produced from a membrane having proton conductivity produced by the solution casting method, by immersing the membrane into organic compound aqueous solution which is soluble to water and has the boiling point of at least 100°C for equilibrium swelling, and the water is evaporated by heating. Japanese Patent Laid-Open Publication No.2004-131530 suggests a method in which a solid electrolyte membrane is obtained by dissolving a compound whose main content is polybenzimidazole having an anionic ionizable group into an alcohols solvent including tetraalkylammonium hydroxide and having the boiling point of at least 90°C. Japanese Patent Laid-Open Publication No.2005-146018 suggests a method in which a proton conductive membrane is produced as follows. At first, a coating liquid including (a) polymer having ion conductive content, (b) an inorganic compound soluble to water or an organic compound having molecular weight of less than 1000 and being soluble to water and (c) an organic solvent is coated on a base. Next, (c) the organic solvent is removed to form a dry membrane. Finally, (b) the compound soluble to water is removed from the dry membrane to form the proton conductive membrane.

In case the solid electrolyte membrane is produced by the solution casting method, the casting membrane is dried so that the organic solvent remained in the casting membrane is evaporated. Compounds which can be the solvent of the solid electrolyte generally have high boiling points. In addition, the solvent is often a basic organic compound that

has a large polarity and easily works with protons. When a membrane containing the basic organic compound is used as the solid electrolyte membrane, the basic organic compound may inhibit protons from passing through the solid electrolyte membrane, and therefore the proton conductivity of the solid electrolyte membrane is lowered. As a result, the solid electrolyte membrane cannot exert the electromotive force enough as the fuel cell. Accordingly, it is necessary to completely remove the organic solvent from the membrane in the solid electrolyte membrane producing process. However, completely removing the solvent having the high boiling point is not easy, so that it takes about 20 hours or more. As a result, time for drying the casting membrane makes up a large share of the whole time for producing the solid electrolyte membrane. Accordingly, in the method in which the solid electrolyte membrane is produced by the solution casting method, shortening the time for the producing is a special challenge for the mass production.

In order to shorten the drying time for the casting membrane, drying degree of the casting membrane during a casting membrane drying process may be lowered, or the casting membrane may be rapidly dried. In the former case, the casting membrane cannot obtain enough self-supporting property, and therefore the casting membrane cannot be easily peeled off in a peeling process. Even if the casting membrane can be peeled off as a wet membrane, the wet membrane will be deformed by its own weight, and will not be transported to the next process. When the solid electrolyte membrane is produced in an on-line method in which each process is continuously performed, the casting membrane needs to obtain enough self-supporting property to stand up under its own weight when peeled off as the wet membrane, in addition to improvement of work efficiency in peeling off the casting membrane. In the latter case, by the rapid drying of the casting membrane, the casting membrane will have drying unevenness in its surface, and localized pinholes will be generated in the casting membrane. The solid electrolyte membrane produced from the casting membrane having the pinholes cannot perform the sufficient properties required to the solid electrolyte membrane.

The method of Japanese Patent Laid-Open Publication No.9-320617 denies the solution casting method and does not resolve the problem that impurities contained in the raw material are remained in the membrane. The methods of Japanese Patent Laid-Open Publications No.2001-307752, No.2002-231270, No. 2004-079378, and No. 2004-131530 are the methods for small-lot production and do not concern about the mass production. Further, in the method of Japanese Patent Laid-Open Publication No.2001-307752, dispersion of a complex of the polymer and the inorganic compound is difficult. In the method of Japanese Patent Laid-Open Publication No.2002-231270, the membrane producing process becomes complicated. In the method of Japanese Patent Laid-Open Publication No.2004-079378, fine pores are generated in the membrane by immersion of the membrane into water and the membrane cannot have uniformity. Although the publication No.2004-079378 says that plural kinds of the solid electrolyte membranes can be produced by the solution casting method, there is no concrete description of methods for realizing it. In the method of Japanese Patent Laid-Open Publication No. 2004-131530, materials used for production of the membrane are limited and there is no description for a method which can use other materials having superior properties. In the method of Japanese Patent Laid-Open Publication No.2005-146018, there is no solution for difficulties of removing the organic solvent having the high boiling point by drying.

Through keen examinations, the inventors of the present invention found that the time for drying the casting membrane can be reduced by a contact between the poor solvent of the solid electrolyte and the casting membrane. In addition, it was also found that by performing solvent substitution to a wet membrane which is obtained from the casting membrane after contacting to the poor solvent, a time for removing the solvent contained in the wet membrane can be reduced. By the present invention, the time for producing the solid electrolyte membrane can be reduced, while the produced solid electrolyte membrane has the superior properties.

Disclosure of invention

A method of the present invention for producing a solid electrolyte membrane according to claim 1 comprising the steps of first to fourth processes. The first process is for casting a dope on a support from a casting die to form a casting membrane, the dope containing a solid electrolyte dissolved in an organic solvent. The second process is for performing a contact between the casting membrane and a contact poor solvent which is a poor solvent of the solid electrolyte, to give a self-supporting property to the casting membrane. The third process is for peeling the casting membrane having the self-supporting property from the support as a wet membrane. And the fourth process is for drying the wet membrane so that the wet membrane becomes the solid electrolyte membrane.

It is preferable that the organic solvent is a mixture of a first compound which is a good solvent of the solid electrolyte and a second compound which is a poor solvent of the solid electrolyte. And it is preferable that the contact poor solvent is either water or aqueous solution containing a compound which is a good solvent of the solid electrolyte.

It is preferable that time for contacting the casting membrane with the contact poor solvent is determined in accordance with at least one of hardness of the casting membrane and weight of the first compound in the casting membrane both of which changes during the contacting. And it is preferable that a modulus of elasticity of the wet membrane in the third process is at least $6\times10^5$Pa.

It is preferable that the method of the present invention further comprises the step of a fifth process for performing

a contact between the wet membrane and a liquid which is compatible with the organic solvent. It is preferable that the liquid is either water or aqueous solution containing the organic solvent. In addition, it is preferable that time for contacting the wet membrane with the liquid is 10 minutes or less.

It is preferable that the method of the present invention further comprises the step of a sixth process for drying the casting membrane before the second process.

It is preferable that the first compound is dimethylsulfoxide, and the second compound is alcohol having one to five carbons. It is preferable that the method of the present invention further comprises the steps of an acid contacting process and a washing process. The acid contacting process is for contacting an acid solution which is a proton donor to the wet membrane while transportation of the wet membrane before the fourth process, and the washing process is for washing the wet membrane with use of cleaning liquid after the acid contacting process but before the fourth process. Further, it is preferable that the acid is a compound containing formula weight of anion of 40 to 1000 at the time of ionization.

It is preferable that the solid electrolyte is a hydrocarbon polymer. It is preferable that the hydrocarbon polymer is an aromatic polymer. Further, it is preferable that the aromatic polymer is a copolymer formed of structural units represented by general formulae (I), (II) and (III) shown in chemical formula 3.

[Chemical formula 3]

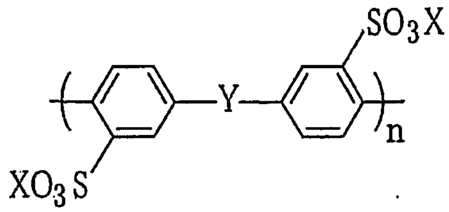 ··· ( I )

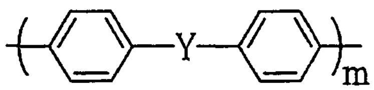 ··· ( II )

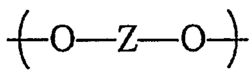 ··· ( III )

(X is a cationic species except a hydrogen atom, Y is $SO_2$, Z has a structure represented in (I) or (II) in a chemical formula 2, n and m satisfy $0.1 \leq n/(m+n) \leq 0.5$)

[Chemical formula 4]

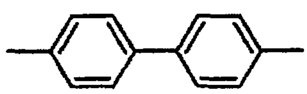 ··· ( I )

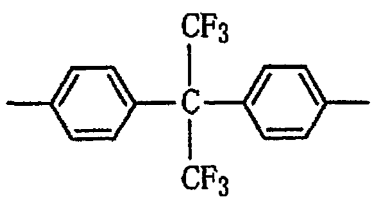 ··· ( II )

An apparatus of the present invention for producing a solid electrolyte membrane comprises a casting membrane forming device, a solvent contacting device, a peeling device, a liquid contacting device and a drying device. The casting membrane forming device is for casting a dope on a support from a casting die to form a casting membrane, the dope containing a solid electrolyte dissolved in an organic solvent. The solvent contacting device is for performing a contact between the casting membrane and a contact poor solvent which is a poor solvent of the solid electrolyte, to give a self-supporting property to the casting membrane. The peeling device is for peeling the casting membrane having the self-supporting property from the support as a wet membrane. The liquid contacting device is for performing a contact between the wet membrane and a liquid which is compatible with the organic solvent. The drying device is for drying the wet membrane so that the wet membrane becomes the solid electrolyte membrane.

It is preferable that the apparatus of the present invention further comprises an acid contacting device provided between the liquid contact device and the drying device. The acid contacting device contains an acid solution which is a proton donor and including a guide for guiding the wet membrane into the acid solution.

A solid electrolyte membrane of the present invention for a fuel cell is produced by the above-described method.

A membrane electrode assembly of the present invention comprises the above-described solid electrolyte membrane, an anode electrode and a cathode electrode. The anode electrode is for generating protons from hydrogen-containing substance supplied from outside, the anode electrode being adhered to one surface of the solid electrolyte membrane. The cathode electrode for synthesizing water from the protons passed through the solid electrolyte membrane and a gas supplied from outside, the cathode electrode being adhered to the other surface of the solid electrolyte membrane.

A fuel cell of the present invention comprises the above-described membrane electrode assembly and current collectors contacting to the electrodes of the membrane electrode assembly for transmitting electrons between the anode electrode and outside and between the cathode electrode and outside.

According to the method of the present invention for producing the solid electrolyte membrane, since there are the first process for casting the dope on the support from the casting die to form a casting membrane, the second process for performing the contact between the casting membrane and the contact poor solvent to give the self-supporting property to the casting membrane, the third process for peeling the casting membrane having the self-supporting property from the support as the wet membrane, and the fourth process for drying the wet membrane so that the wet membrane becomes the solid electrolyte membrane, the time for the second and fourth processes can be reduced, that is, the time for producing the solid electrolyte membrane can be reduced. Accordingly, the method of the present invention is suitable for the mass production of the solid electrolyte membrane. In addition, when the membrane electrode assembly including this solid electrolyte membrane is used for the fuel cell, the fuel cell can exert superior electromotive force.

Brief Description of Drawings

Fig. 1 is a schematic view illustrating a dope producing apparatus;
Fig. 2 is an explanatory view illustrating a producing process of a solid electrolyte membrane of the present invention;
Fig. 3 is a schematic view illustrating a membrane producing apparatus of a first embodiment;
Fig. 4 is a schematic view illustrating a membrane producing apparatus of a second embodiment;
Fig. 5 is a section view of a membrane electrode assembly;
and
Fig. 6 is a section view of a fuel cell.

Best Mode for Carrying Out the Invention

Embodiments of the present invention are described below in detail. However, the present invention is not limited to the following embodiments. First, materials of a solid electrolyte membrane of the present invention are described. Thereafter, a producing method for the solid electrolyte membrane is described.

[Material]

A dope includes a polymer as a solid electrolyte and a solvent to dissolve the polymer. As the solid electrolyte content, a hydrocarbon polymer is preferable. As the hydrocarbon polymer, an aromatic polymer is preferable. As the aromatic polymer, a polymer having a cation species, especially the compound shown in the chemical formula 3 is preferable. The cation species can be classified into H (hydrogen atom) and other than H. Although the present invention can use each one, it is preferable that X is the cation species other than H when the compound shown in the chemical formula 3 is used. When X is the cation species other than H, a proton substitution is preferably performed in a membrane forming process or after the formation of the membrane. That is, the polymer in which X in the chemical formula 3 is the cation species other than H is a proton accepting polymer. In following descriptions, the polymer before the proton substitution is called as the precursor, and the polymer after the proton substitution is called as the solid electrolyte.

In this specification, the proton substitution means that the cation species other than H is substituted by the hydrogen atom. The cation species means an atom or an atomic group which generates cation (s) at the time of ionization. The cation species may have a valence of one or more. In addition, in this specification the cation means a positive ion

if not otherwise specified.

In case that a membrane of the precursor (hereinafter called as the precursor membrane) is produced, at first a dope containing the precursor shown in the chemical formula 3 is prepared, next the dope is cast on a support, and then a casting membrane formed on the support is peeled as the precursor membrane. The precursor membrane is subject to the proton substitution for substituting the hydrogen atom for X in the substance shown in the chemical formula 3 contained in the precursor membrane. Accordingly, a membrane of the solid electrolyte (hereinafter called as the solid electrolyte membrane) can be produced.

Particularly, when a precursor membrane formed of the compound shown in the chemical formula 3 is used, a membrane expansion ratio of the solid electrolyte membrane by water absorption is compatible with the proton conductivity. In case $n / (m+n) < 0.1$, the amount of proton acceptor may be too low in the precursor membrane and it is possible that a path for transporting the protons (that is, the proton channel) is not sufficiently formed. As a result, the solid electrolyte membrane may not exert the sufficient proton conductivity for a practical use. In case $n /(m+n) > 0.5$, the water absorption of the solid electrolyte membrane becomes excessively higher which result in higher membrane expansion ratio by the water absorption. As a result, the membrane solid electrolyte is easily degraded.

The membrane obtains the function as the solid electrolyte even if the substitution of the hydrogen atom H for the cation species X in the chemical formula 3 is not performed. Accordingly, the membrane can be used as the solid electrolyte membrane even when the proton substitution is not performed. However, the proton conductivity of the membrane increases as the percentage of the substitution of the hydrogen atom H for X (hereinafter it is called as the proton substitution rate) increases. For that reason, it is especially preferable that X is the hydrogen atom H when the membrane is used for the fuel cell. That is, it is preferable that the proton substitution rate is high in the proton substitution in which the solid electrolyte membrane is generated from the precursor membrane.

As the cation in the compound shown in the chemical formula 3, alkali-metal cation, alkali earth metal cation and ammonium cation are preferable, and calcium ion, barium ion, quaternary ammonium ion, lithium ion, sodium ion, potassium ion are more preferable.

It is preferable to use the solid electrolyte having the following properties. The proton conductivity is preferably not less than 0.005S/cm and more preferably not less than 0.01S/cm at the temperature of, for instance, 25°C, and the relative humidity of, for instance, 70%. Further, the proton conductivity after immersing the membrane in 50% aqueous methanol solution for one day at the temperature of 18°C is preferably not less than 0.003S/cm, and more preferably not less than 0.008S/cm. In particular, it is preferable that a percentage of reduction in the proton conductivity of the membrane after the immersion compared to that before the immersion is not more than 20%. Methanol diffusivity is preferably not more than $4 \times 10^{-7}$ $cm^2$ /sec, and especially preferably not more than $2 \times 10^{-7}$ $cm^2$/sec.

As the strength of the membrane, elastic modulus is preferably not less than 10MPa, and more preferably not less than 20MPa. Measuring methods of the elastic modulus are disclosed in a paragraph [0138] of Japanese Patent Laid-Open Publication No. 2005-104148. The above preferable values are obtained by using a tensile testing device produced by Toyo Baldwin Co. Ltd. If other measuring method and/or other tensile testing device are used, correlation between the obtained value and the value obtained by using the above tensile testing device should be previously calculated.

As the durability, between before and after a test with time in which the membrane is immersed in 64wt.% methanol water solution at a constant temperature, a percentage of change in each of weight, ion exchange capacity, and methanol diffusivity is preferably not more than 20%, and more preferably not more than 15%. Further, in a test with time in hydrogen peroxide, a percentage of change in each of weight, ion exchange capacity, methanol diffusivity is preferably not more than 20%, and more preferably not more than 10%. The volume swelling ratio of the membrane in 64wt.% methanol water solution at the constant temperature is preferably not more than 10% and more preferably not more than 5%.

The membrane with stable water absorption ratio and stable moisture content is preferable. It is preferable that the membrane has extremely low solubility in the alcohols, water, or mixture of alcohol and water to the extent that it is practically negligible. It is also preferable that the decrease of the membrane weight and changes in shapes and conditions of the membrane when the membrane is immersed in the above liquid is extremely small to the extent that it is practically negligible.

The proton conductivity property of the solid electrolyte membrane is represented by an index which is a ratio of the proton conductivity to the methanol transmission coefficient. The higher the index in a certain direction, the higher the proton conductive property becomes in such direction. In the thickness direction of the solid electrolyte membrane, the proton conductivity increases proportional to the thickness while the methanol permeability increases inversely proportional thereto. Accordingly, the proton conductive property of the solid electrolyte membrane is controlled by changing the thickness. In the solid electrolyte membrane used for the fuel cells, since the anode is provided on one side of the solid electrolyte membrane and the cathode is provided on the other side of the solid electrolyte membrane, it is preferable that the index in the membrane thickness direction is larger than that in other directions. The thickness of the solid electrolyte membrane is preferably in a range of 10 μm to 300 μm. If, for instance, both the proton conductivity

and the methanol diffusion coefficient are high in the solid electrolyte, it is especially preferable to produce the membrane with a thickness of 50 μm to 200 μm. If, for instance, both the proton conductivity and the methanol diffusion coefficient are low in the solid electrolyte, it is especially preferable to produce the membrane with a thickness of 20 μm to 100 μm.

Heat resistant temperature is preferably not less than 200°C, more preferably not less than 250°C and especially preferably not less than 300°C. The heat resistant temperature means the temperature at which a decrease in the membrane weight reaches 5% when the heat is increased at the measure of 1°C/min. The decrease in the membrane weight does not include an amount of moisture and the like evaporated from the membrane.

When the solid electrolyte is formed in the membrane form and used for the fuel cell according to a conventional method, the present invention becomes especially effective in a condition that the maximum power density thereof is not less than $10 mW/cm^2$.

By using the polymer which is the precursor of the above-mentioned solid electrolyte, a dope suitable for precursor membrane production is produced, and accordingly, the solid electrolyte membrane suitable as the fuel cell is produced by application of the proton substitution to the precursor membrane. The dope suitable for the membrane production is, for instance, a dope whose viscosity is relatively low, and from which foreign matters are easily removed through filtration.

The polymer as the content of the dope may be a polymer having a proton donating group which is the solid electrolyte. The polymer having the proton donating group is not particularly limited to the following. Any known polymer used as the proton conductive material having the acid residue is preferably used, for instance, polymer compounds formed of addition polymerization having the sulfonic acid group in side chains, poly(meth) acrylate having side chains of phosphoric acid groups, sulfonated poly ether ether ketone which is a sulfonated compound of poly ether ether ketone, sulfonated polybenzimidazole, sulfonated polysulfone which is a sulfonated compound of polysulfone, sulfonated compound of heat-resistant aromatic polymer compounds and so forth. As addition polymerization polymer having sulfonic acid in the side chain, there are perfluorosulfonic acid polymer such as typically Nafion (registered trademark), sulfonated polystyrene, sulfonated polyacrylonitrile-styrene, sulfonated polyacrylonitrile butadiene-styrene and the like. As sulfonated compound of the heat-resistant aromatic polymer compound, there are sulfonated polyimide and the like.

Preferable examples of the perfluorosulfonic acid are the substances disclosed in, for instance, Japanese Patent Laid-Open Publications No. 4-366137, 6-231779 and 6-342665. Especially, the substance shown in Chemical formula 5 shown below is preferable. In the Chemical formula 5, m is in a range of 100 to 10000, preferably in a range of 200 to 5000, and more preferably in a range of 500 to 2000. In addition, n is in a range from 0.5 to 100, and especially preferable in a range of 5 to 13.5. Further, x is approximately equal to m, and y is approximately equal to n.

[Chemical formula 5]

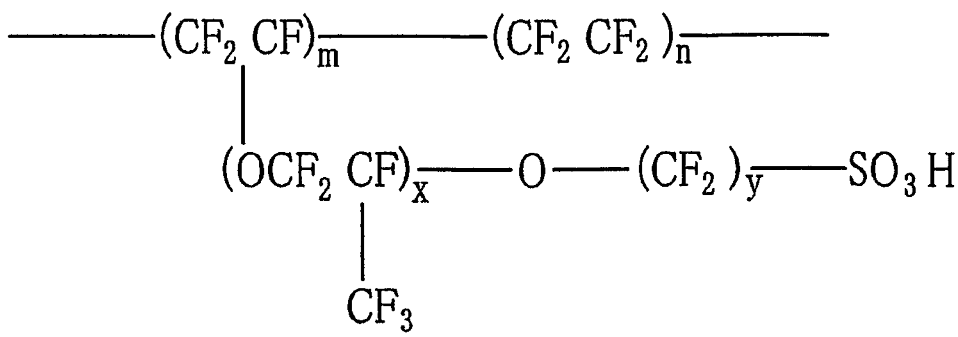

Preferable examples of sulfonated polystyrene, sulfonated polyacrylonitrile styrene and sulfonated polyacrylonitrile butadiene styrene are substances disclosed in Japanese Patent Laid-Open Publication Nos. 5-174856 and 6-111834, or the substance shown below in Chemical formula 6.

[Chemical formula 6]

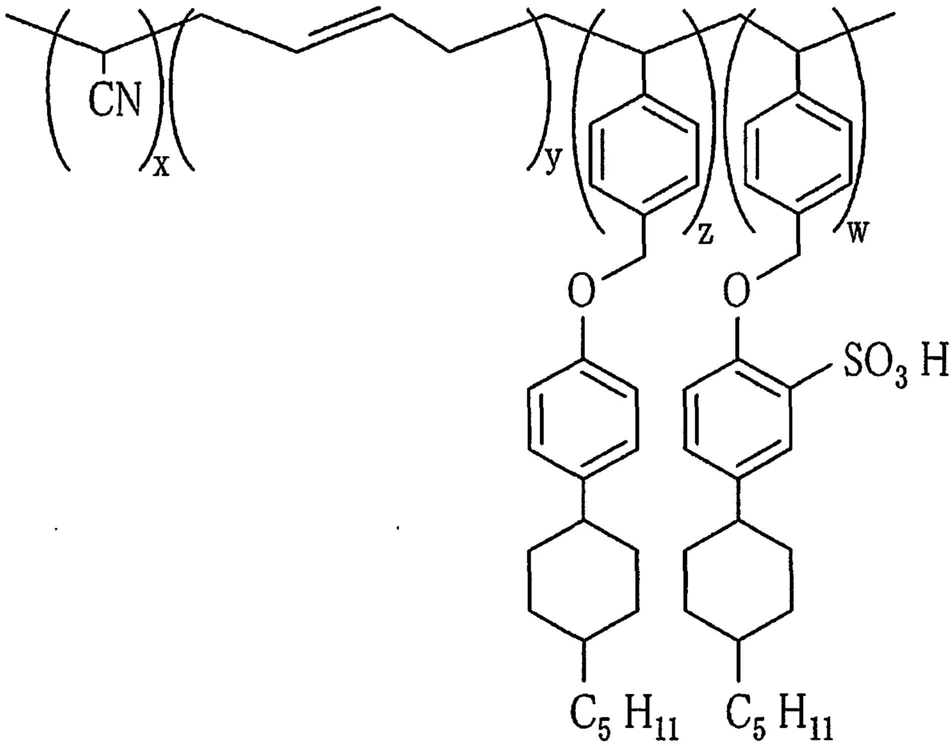

Preferable examples of the sulfonated compound of the heat-resistant aromatic polymer are the substances disclosed in, for instance, Japanese Patent Laid-Open Publication Nos. 6-49302, 2004-10677, 2004-345997, 2005-15541, 2002-110174, 2003-100317, 2003-55457, 9-245818, 2003-257451 and 2002-105200, and PCT Publication No. WO/97/42253 (corresponding to Japanese Patent Publication of translated version No. 2000-510511). Among the above examples, the substances shown in Chemical formula 7 and Chemical formula 8, and a copolymer formed of structural units represented by general formulae (I), (II) and (III) shown in a chemical formula 9 listed below are especially preferable.

[Chemical formula 7]

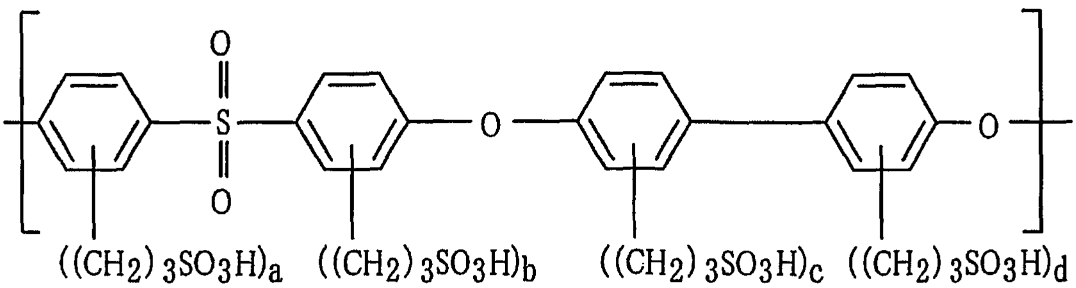

[Chemical formula 8]

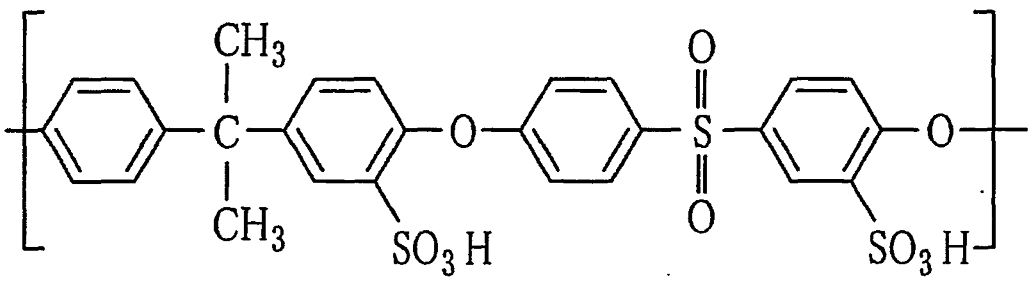

[Chemical formula 9]

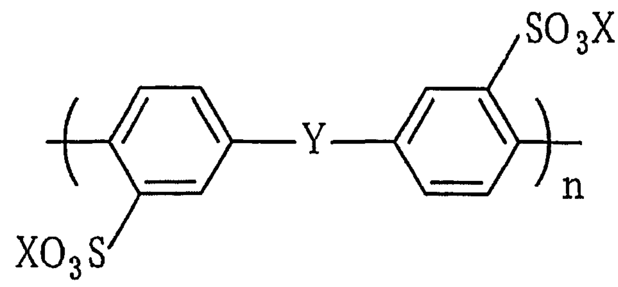

... ( I )

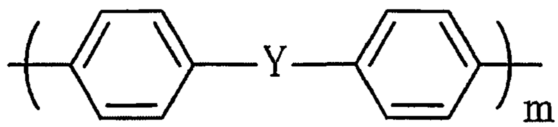

... ( II )

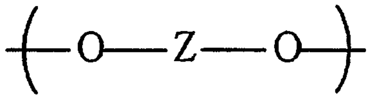

... ( III )

(X is H, Y is $SO_2$, Z is a structure represented by (I) or (II) in the chemical formula 4, n and m satisfy $0.1 \leq n/(m+n) \leq 0.5$)

In the solid electrolyte membrane formed of the compound shown in each of the chemical formulae 5 and 9, the membrane expansion ratio by water absorption is compatible with the proton conductivity. In case $n / (m+n) < 0.1$ is satisfied in the substance shown in the chemical formula 9, the path for transporting the protons (that is, the proton channel) possibly formed insufficiently. As a result, the obtained solid electrolyte membrane may not exert the sufficient proton conductivity for a practical use. In case $n / (m+n) > 0.5$ is satisfied in the substance shown in the chemical formula 9, the water absorption of the solid electrolyte membrane becomes excessively higher which result in higher membrane expansion ratio by the water absorption. As a result, the solid electrolyte membrane is easily degraded.

The sulfonated reaction in the process for obtaining the above compounds shown in Chemical formulae 5 to 9 is performed through the various synthesis methods disclosed in known references. As sulfonating agents, sulfuric acid (concentrated sulfuric acid), fuming sulfuric acid, sulfur trioxide (in a gas or liquid), sulfur trioxide complex, amidosulfuric acid, chlorosulfonic acid and the like are used. As the solvent, hydrocarbons (benzene, toluene, nitrobenzene, chlorobenzene, dioxetan or the like), halogenated alkyls dichloromethane, trichloromethane, dichloroethane, tetrachloromethane, or the like) and the like are used. Reaction temperature is determined in a range of -20°C to 200°C according to activity of the sulfonating agent. In addition, it is also possible to use other methods. For instance, mercapto group, disulfide group or sulfonic acid group is previously introduced to a monomer to synthesize the sulfonated compound by oxidation with an oxidizer. As the oxidizer, hydrogen peroxide, nitric acid, bromine water, hypochlorous acid salt, hypobromite salt, potassium permanganate, chromic acid or the like are used. As the solvent, water, acetic acid, propionic acid or the like are used. The reaction temperature in the above method is determined in a range of room temperature (for instance, 25°C) to 200°C according to the activity of the oxidizer. In another method, halogeno-alkyl group is previously introduced to the monomer to synthesize the sulfonated compound by substitution of sulfite acid salt, hydrogen sulfite salt or the like. As the solvent, water, alcohol, amide, sulfoxide, sulfone or the like are used. The reaction temperature is determined in a range of the room temperature (for instance 25°C) to 200°C. It is also possible to use mixture of two or more solvents as the solvent for the above sulfonation reaction.

Further, it is also possible to use alkyl sulfonating agent in the reaction process to produce the sulfonated compounds. One of the common methods is Friedel-Crafts Reaction (see Journal of Applied Polymer Science, Vol. 36, 1753-1767, 1988) using sulfone and $AlCl_3$. When the alkyl sulfonating agent is used to carry out the Friedel-Crafts Reaction, the following substances are usable as the solvent: hydrocarbon (benzene, toluene, nitrobenzene, acetophenon, chlorobenzen, trichlorobenzene or the like), alkyl halide (dichloromethane, trichloromethane, dichloroethane, tetrachloromethane, trichloroethane, tetrachloroethane or the like) or the like. The reaction temperature is determined in a range of the room temperature to 200°C. It is also possible to use the mixture of two or more solvents.

As the solvent for the dope, a solvent in which the polymer as the solid electrolyte is dissolved, preferably an organic compound is used. When the precursor is used as the material of the dope, any solvent in which the precursor is dissolved may be used. For instance, there are aromatic hydrocarbon (for instance, benzene, toluene and the like), halogenated hydrocarbon (for instance, dichloromethane, chlorobenzene and the like), alcohol (for instance, methanol, ethanol, n-propanol, n-butanol, diethylene glycol and the like), ketone (for instance, acetone, methyl ethyl ketone, and the like), ester (for instance, methyl acetate, ethyl acetate, propyl acetate and the like), ether (for instance, tetrahydrofuran, ethylene glycol monomethyl ether), and compounds containing nitrogen (N-methylpyrrolidone, N, N-dimethylformamide (DMF), N, N'-dimethylacetamide (DMAc) and the like), dimethyl surfoxide (DMSO) and the like.

As the solvent of the dope, it is also possible to use a mixture in which plural compounds are mixed. When the mixture is used as the solvent, it is preferable to mix a compound of the good solvent and a compound of the poor solvent of the solid electrolyte. Since the solvent and the polymer are mixed such that the solid electrolyte constitutes 5 wt. % of the whole weight, whether a liquid compound used is the poor solvent or the good solvent of the solid electrolyte can be determined by the amount of the insoluble residues. When the precursor is used as the material of the dope, whether a liquid compound used is the poor solvent or the good solvent of the precursor is determined. The good solvent of the solid electrolyte in which the solid electrolyte is dissolved has a relatively high boiling point compared to the commonly used compounds. On the other hand, the poor solvent has a relatively low boiling points compared to the commonly used compounds. Accordingly, by using the mixture of the compound of the poor solvent and the compound of the good solvent as the solvent for dope, the boiling point of the mixture in which the solid electrolyte is dissolved is lowered. As a result, efficiency and effect in removing the solvent during the membrane production process is improved. In particular, the drying efficiency of the casting membrane is significantly improved.

When the solvent for dope is the mixture of the compound of the good solvent and the compound of the poor solvent, the former is called as the good solvent content and the latter is called as the poor solvent content. It is preferable that weight ratio of the poor solvent is larger, concretely, not less than 10% and less than 100% is preferable, and more preferably a ratio of (weight of the good solvent content) : (weight of the poor solvent content) is in a range of 90:10 to 10:90. Thereby, when the weight ratio of the poor solvent is larger, the percentage of the substance with the low boiling point becomes larger in the total weight of the solvents. Accordingly, the drying efficiency and the drying effects are further improved during the producing process of the solid electrolyte membrane.

As the good solvent, DMF, DMAc, DMSO and NMP are preferable. Among the above, DMSO is especially preferable in terms of safety and relatively low boiling point. As the poor solvent, lower alcohol having 1 to 5 carbons, methyl acetate and acetone are preferable. Among the above, the lower alcohol having 1 to 3 carbons are more preferable. If the DMSO is used as the good solvent, methyl alcohol is especially preferable in terms of excellent solubility in the DMSO.

To improve various membrane properties of the solid electrolyte membrane, additives are added to the dope. As the additives, antioxidant agents, fibers, fine particles, water absorbing agents, plasticizers, solubilizers and the like are used. A ratio of the additives is preferably in a range of 1 wt. % to 30 wt.% when the whole solid component in the dope is 100 wt.%. The ratio and the sorts of the additives should not adversely affect the proton conductivity. The additives will be described in the following.

As the antioxidant agent, for instance, compounds such as hindered phenols, monovalent or divalent sulfurs, trivalent phosphates, benzophenones, bonzotriazoles, hindered amines, cyanoacrylates, sallicylates and oxalic acid anillides are preferably used. In particular, compounds disclosed in Japanese Patent Laid-Open Publications No. 8-53614, 10-101873, 11-114430 and 2003-151346 are preferably used.

As the fibers, for instance, perfluorocarbon fibers, cellulose fibers, glass fibers and polyethylene fibers are preferably used. In specific, the fibers disclosed in Japanese Patent Laid-Open Publications No. 10-312815, 2000-231938, 2001-307545, 2003-317748, 2004-63430 and 2004-107461 are used.

As the fine particles, for instance, titanium oxide, zirconium oxide and the like are preferably used. In specific, the fine particles disclosed in Japanese Patent Laid-Open Publications No. 2003-178777 and 2004-217931 are preferably used.

As the water absorbers, that is, the hydrophilic substances, for instance, cross-linked polyacrylate acid salt, starch-acrylate salt, poval (polyvinyl alcohol), polyacrylonitrile, carboxymethylcellulose, polyvinylpyrrolidone, polyglycoldialkylether, polyglycoldialkylesther, synthetic zeolite, titania gel, zirconia gel, and yttria gel are preferably used. In specific, the water absorbers disclosed in Japanese Patent Laid-Open Publications No. 7-135003, 8-20716 and 9-251857 are preferably used.

As the plasticizer, for instance, phosphoric acid ester compound, chlorinated paraffin, alkylnaphthalene compound, sulfone alkylamide compound, oligo ether, and aromatic nitrile are preferably used. In specific, the plasticizers disclosed in Japanese Patent Laid-Open Publications No. 2003-288916 and 2003-317539 are preferably used.

As the solubilizers for dissolving the solid electrolyte with the solvent, substances whose boiling points or sublimation points are not less than 250°C are preferable, and those not less than 300°C are more preferable.

It is also possible to add various polymers different from the solid electrolyte to the dope for following objectives: (1) to enhance the mechanical strength and (2) to increase the acid concentration in the membrane.

A polymer whose molecular weight is approximately in a range of 10000 to 1000000 and soluble to the precursor is suitable to achieve the above objective (1). For instance, perfluoropolymer, polystyrene, polyethyreneglycol, polyoxetane, polyether ketone, polyether sulfone, and the polymers containing two or more structural repeating units of the above polymers are preferable. It is preferable to add at least one of the above polymers to the dope such that the weight ratio of the above polymer(s) with respect to the whole weight of the dope is in a range of 1 wt.% and 30 wt.%. It is also possible to improve the solubility of the above polymer in the precursor by adding the solubilizer. As the solubilizer, the substance with the boiling point or the sublimation point of not less than 250°C is preferable, and that not less than 300°C is more preferable.

A polymer having proton acid segment and the like is preferable to achieve the above objective (2). As such polymer, for instance, perfluorosulfone acid polymer such as Nafion (registered trademark), sulfonated polyether ether ketone having phosphoric acid in the side chain, sulfonated heat-resistant aromatic polymer compounds such as sulfonated poly ether sulfone, sulfonated polysulfone, sulfonated polybenzimidazole and the like are used. Further, it is preferable to add the above polymers to the dope in a range of 1 wt.% and 30 wt.% to the whole weight of the membrane.

When the obtained solid electrolyte membrane is used for the fuel cell, it is possible to add an active metal catalyst to the dope for promoting redox reaction of the anode fuel and the cathode fuel. Since the fuel permeated in the solid electrolyte from one of the electrodes is consumed therein without reaching the other electrode, the crossover phenomenon is prevented. Active metal catalyst is not particularly limited as long as it functions as the catalyst for the electrodes. However, platinum or platinum based alloy is especially suitable.

[Dope Production]

Fig. 1 illustrates a dope producing apparatus 10. The present invention is not limited to the following method and apparatus for producing the dope. Hereinafter, a dope producing method with use of the precursor is explained as an example. Note that when the solid electrolyte is used instead of the precursor 12a, the dope can be produced in the same method described below.

The dope producing apparatus 10 is constituted of a solvent tank 11, a hopper 12, an additive tank 15, a mixing tank 16, a heating device 18, a temperature controlling device 21, a filtration device 22, a flash device 26, and a filtration device 27. The solvent tank 11 stores the organic solvent 11a. The hopper 12 supplies the precursor 12a. The additive tank 15 stores the additive. The mixing tank 17 mixes the organic solvent 11a, the precursor 12a and the additive to form a liquid mixture 16. The heating device 18 heats the liquid mixture 16. The temperature controlling device 21 controls the temperature of the heated liquid mixture 16. Thereafter, the filtration device 22 filters the liquid mixture 16. After the filtration, the flash device 26 controls the concentration of the dope 24. Then the filtration device 27 filters the dope 24. The dope producing apparatus 10 further includes a recovery device 28 and a refining device 29. The recovery device 28 recovers the solvent. The refining device 29 refines the recovered solvent. The dope producing apparatus 10 is connected to a membrane producing apparatus 33 via a stock tank 32. Valves 36-38 for controlling a liquid feeding amount and pumps 41, 42 for feeding the liquid are provided in the dope producing apparatus 10. The positions and the number of the valves and the pumps are properly changed.

The dope 24 is produced in the following method when the dope producing apparatus 10 is used. First, the valve 37 is opened to feed the organic solvent 11a from the solvent tank 11 to the mixing tank 17. Next, the precursor 12a in the hopper 12 is fed to the mixing tank 17. The precursor 12a may be continuously fed to the mixing tank 17

through a supplying device which continuously measures and supplies the solid electrolyte, or intermittently fed to the mixing tank 17 through a supplying device which measures and supplies the precursor 12a by a predetermined amount. Further, the valve 36 is adjusted to feed a necessary amount of additive solution from the additive tank 15 to the mixing tank 17. As the solvent in the additive solution, the compound same as the solvent of the polymer is preferably used in terms of excellent solubility in the dope.

Other than feeding the additive in the form of solution, for instance, in the case the additive is liquid at room temperature, the additive can be fed to the mixing tank 17 in the liquid form. Further, in the case the additive is solid, it is possible to use the hopper 12 to feed the additive to the mixing tank 17. To add several additives, it is possible to dissolve several additives in a solution and put the solution in the additive tank 15. It is also possible to use plural additive tanks. Each of the additive tanks is filled with the solution containing a different additive. Each solution may be separately fed to the mixing tank 17 through a pipe independent from each other.

In the above description, the organic solvent 11a, the precursor 12a and the additive are put into the mixing tank 17 in this order; however, the order is not restricted. For instance, a preferable amount of the organic solvent 11a is fed to the mixing tank 17 after feeding the precursor 12a to the mixing tank 17. Further, it is not necessary to mix the additive in the mixing tank 13 together with the precursor 12a and the organic solvent 11a. The additive may be mixed to the mixture of the precursor 12a and the organic solvent 11a by using an inline-mixing method in a later process.

A jacket 46, a first stirrer 48 rotated by a motor 47 and a second stirrer 52 rotated by a motor 51 are preferably attached to the mixing tank 17. The jacket 46 wraps around the mixing tank 17 to supply a heat transfer medium in a space between the mixing tank 17 and the jacket 46. The temperature of the mixing tank 17 is controlled by the heat transfer medium flowing in the space between the tank 17 and the jacket 46. A preferable temperature range of the mixing tank 17 is from -10°C to 55°C. The liquid mixture 16, in which the precursor 12a is swelled in the organic solvent 11a, is obtained by properly selecting and rotating the first and second stirrers 48, 52. It is preferable that the first stirrer 48 has an anchor blade, and the second stirrer 52 has an eccentric stirrer of a dissolver type.

Next, the liquid mixture 16 is transported to the heating device 18 through the pump 41. It is preferable that a pipe through which the liquid mixture 16 passes in the heating device 18 is provided with the jacket. The heat transfer medium passes through a space between the pipe and the jacket. Further, the heating device 18 preferably has a pressurizing section (not shown) to apply pressure to the liquid mixture 16. Thereby, the solid content in the liquid mixture 16 is dissolved effectively and efficiently while the liquid mixture 16 is heated and/or pressurized. Hereinafter, the method for dissolving the solid content in the organic solvent 11a by heating is referred to as a heat dissolution method. In the heat dissolution method, the liquid mixture 16 is preferably heated to reach the temperature in a range of 60°C to 250°C.

Instead of the heat-dissolution method, a cooling-dissolution method is possibly used for dissolving the solid content in the organic solvent 11a. In the cooling dissolution method, the liquid mixture 16 is preferably cooled in a range of -100°C to -10°C. It becomes possible to sufficiently dissolve the precursor 12a in the organic solvent 11a by properly selecting one of the heat-dissolving method and the cooling-dissolving method.

The temperature of the liquid mixture 16 is adjusted by the temperature control device 21 to reach the room temperature. Thereafter, the liquid mixture 16 is filtered through the filtration device 22 to remove the foreign matters such as the impurities and the agglomeration. Hereinafter the liquid mixture 16 is referred to as the dope 24. An average pore diameter of the filter of the filtration device 22 is preferably 10 μm or less. However, if the pore diameter is too small, a long time is required for filtration of the dope. Accordingly, the average pore diameter of the filter is determined in consideration of the time for producing the dope.

After the filtration, the dope 24 is transported to the stock tank 32 through the valve 38 and temporarily stored, and then used for the membrane production.

However, a method, in which the solid content is swelled and then dissolved into the solvent, requires a longer time as the concentration of the precursor 12a increases, which reduces the production efficiency. In such case, it is preferable to prepare the dope with the lower concentration of the precursor 12a, and then to carry out a concentration process to obtain the intended concentration. For instance, the dope 24 filtered through the filtration device 22 is transported to the flash device 26 through the valve 38, and a part of the organic solvent 11a contained in the dope 24 is evaporated to concentrate the dope 24. The concentrated dope 24 is transported from the flash device 26 to the filtration device 27 through the pump 42. At the filtration, the temperature of the dope 24 is preferably from 0°C to 200°C. The impurities of the dope 24 are removed through the filtration device 27. Thereafter, the dope 24 is transported to and temporarily stored in the stock tank 32, and then used for the membrane production. Note that the foams may be formed in the concentrated dope 24. It is preferable to perform processing to remove the foams prior to transporting the concentrated dope 24 to the filtration device 27. It is possible to apply known methods, for instance, an ultrasonic irradiation method in which the ultrasound is irradiated to the dope 24 for removing the foams.

Further, the solvent vapor generated by the flash evaporation in the flash device 26 is condensed to liquid and recovered by the recovery device 28 having the condenser (not shown). The recovered solvent is refined as the solvent for the dope production in the refining device 29 and reused. Such recovery and refining are advantageous to reduce production cost and also prevent adversely affecting human health and environment by virtue of the closed system for

producing the dope 24.

When impurities such as large particles and foreign materials are contained in the dope 24, it is possible that the proton conductivity of the solid electrolyte membrane from the dope 24 is decreased and the solid electrolyte membrane is degraded. Accordingly, the dope 24 is preferably filtrated at least once by the filtration device while the dope producing processes. A filtration diameter of the filtration device is preferably no more than 10$\mu$m. Note that the number and positions of the filtration devices, and the number of filtration of the dope are not limited.

By using the above methods, the dope 24 whose concentration of the precursor 12a is in a range of not less than 5 wt.% and not more than 50 wt.% of the total weight is produced. The concentration of the precursor 12a is more preferably in a range of not less than 10 wt.% and not more than 40 wt.% of the total weight. Further, the concentration of the additive is preferably in a range of not less than 1 wt.% and not more than 30 wt. % when the whole solids contained in the dope 24 is considered to be 100 wt.%. Whether the solid content is dissolved or not in the organic solvent 11a in the dope 24 can be confirmed by putting the light from a fluorescent lamp on the dope 24 after the filtration.

[Solid electrolyte membrane production]

Hereinafter the method for producing the solid electrolyte membrane is described. In FIG.2, a flow of a solid electrolyte membrane producing process 60 is shown. Note that only a case that the polymer shown in the chemical formula 3 is used as the precursor for the solid electrolyte is briefly explained with reference to FIG. 2, and each process is described in detail with reference to FIG.3.

The solid electrolyte membrane producing process 60 comprises a casting membrane forming process 63, a self-supporting property developing process 66, a peeling process 68, a solvent substitution process 70, a draining process 71, a precursor membrane drying process 72, a proton substitution process 76, a washing process 77 and a hydrogen-substituted membrane drying process 78. In the casting membrane forming process 63, the casting membrane 61 is formed on the support from the dope. In the self-supporting property developing process 66, the self-supporting property is developed on the casting membrane 61. In the peeling process 68, the casting membrane 61 is peeled from the support to be a wet membrane (hereinafter called as the precursor membrane) 27. In the solvent substitution process 70, the precursor membrane 67 contacts substitution solvent. In the draining process 71, liquid on the precursor membrane 67 is removed after the solvent substitution process 70. In the precursor membrane drying process 72, the precursor membrane 67 is dried after the draining process 71. In the proton substitution process 76, the precursor membrane 67 becomes the hydrogen-substituted membrane 75 by the proton substitution. In the washing process 77, the hydrogen-substituted membrane 75 is washed. In the hydrogen-substituted membrane drying process 78, the washed hydrogen-substituted membrane 75 is dried to be the solid electrolyte membrane 79.

In the casting membraneforming process 63, the dope is cast on the support to form the casting membrane 61. The support is wound on a drive roller and moved endlessly. The casting membrane 61 is moved according to the movement of the support, until peeled as the precursor membrane 67 in the peeling process 68.

Because a large amount of the organic solvent is contained in the casting membrane 61 right after being formed, the membrane does not have the self-supporting property. In the self-supporting property developing process 66, some extent of the organic solvent 11a (see FIG.1) contained in the casting membrane 61 is removed to develop the self-supporting property. The self-supporting property developing process 66 includes a casting membrane drying process 66a and a solvent contacting process 66b. Although the casting membrane drying process 66a can be omitted, it is preferable to perform this process to increase the effect of the present invention.

In the casting membrane drying process 66a, the casting membrane 61 on the support is dried by a casting membrane drier. The casting membrane drier is provided near the path of the casting membrane 61. According to this process, the organic solvent in the casting membrane 61 is vaporized and an amount of the organic solvent remaining in the casting membrane 61 (hereinafter it is called as the remaining solvent amount) is reduced. In addition, the efficiency of the solvent contacting process 66b can be increased. Note that a heater, a drying device which can feed dry air and other devices can be used as the casting membrane drier.

In the solvent contacting process 66b, the casting membrane 61 on the support contacts poor solvent (hereinafter called as the contact poor solvent) which is the solid electrolyte. According to the contact to the contact poor solvent, a part of the organic solvent is substituted by the contact poor solvent. This process achieves (1) improvement of the self-supporting property of the casting membrane 61 and (2) improvement of drying efficiency of the casting membrane 61. In addition, when the contact poor solvent has a low boiling point, a boiling point of the organic solvent in the casting membrane 61 is lowered by the solvent substitution, and the organic solvent becomes easy to be dried by the drier. Accordingly, the remaining solvent amount in the casting membrane 61 is decreased. That is, by the self-supporting property developing process 66, the self-supporting property is easily developed in the casting membrane 61.

In the peeling process 68, the casting membrane 61 having the self-supporting property is peeled from the support to be the precursor membrane 67. A preferable range of modulus of elasticity of the precursor membrane 67 in the peeling process 68 is called as the preferable conveying range. The preferable conveying range is at least $6\times10^5$Pa

of the modulus of elasticity. When the modulus of elasticity is less than $6\times10^5$Pa, it is possible that the precursor membrane 67 is deformed by its own weight while being conveyed.

In an online method, the respective processes in the solid electrolyte membrane producing process 60 are continuously performed. In this case, to obtain the precursor membrane 67 having the modulus of elasticity in the preferable conveying range, parameters in the self-supporting property developing process 66 are optimized. As the parameters, there are the materials constituting the precursor membrane 67, the temperature and concentration (the remaining solvent amount) of the casting membrane 61 and so on. The optimum values of these parameters can be found through experimental results in the self-supporting property developing process 66. In addition, the modulus of elasticity of the precursor membrane 67 can be found also by fluctuation of tension applied to a roll for conveying the precursor membrane 67.

In an offline method, the respective processes in the solid electrolyte membrane producing process 60 are performed by batch processing. In this case, the modulus of elasticity of the precursor membrane 67 can be measured by a tensile test with use of a tensile testing device, in addition by the above-described method. For example, the tensile test is performed with use of all-purpose tensile testing device produced by Toyo Baldwin Co. Ltd., (model No. STM T50BP), at 23°C and the humidity of 70% RH atmosphere. A stress al of the precursor membrane 67 is measured when the precursor membrane 67 is stretched with the tensile velocity of 10%/min and a strain $\varepsilon1$ is 0.5%. The modulus of elasticity of the precursor membrane 67 can be found by applying the measured stress $\sigma1$ and the strain $\varepsilon1$ into Hooke's law.

In the solvent substitution process 70, the precursor membrane 67 contacts the substitution solvent. The substitution solvent is liquid which has high compatibility to the organic solvent remained in the precursor membrane 67. By the contact between the substitution solvent and the precursor membrane 67, the remaining organic solvent in the precursor membrane 67 is substituted by the substitution solvent (hereinafter this process is called as solvent substitution). By the solvent substitution with use of the substitution solvent, the remaining solvent amount in the precursor membrane 67 is decreased. The solvent substitution is performed such that the remaining solvent amount in the precursor membrane 67 reaches a predetermined value.

The solvent substitution process 70 may be performed plural times. In this case, the substitution solvent for each process is preferably selected such that the boiling point of the solvent used for later process is lower than that of the solvent used for former process. Since the boiling point of the residual solvent in the precursor membrane 67 can be lowered by the plural times of the solvent substitution process 70, the drying process can be effectively performed after the solvent substitution process 70.

In the draining process 71, excess liquid on the precursor membrane 67 is removed by an air shower or another method. According to the draining process 71, time required for drying the precursor membrane 67 in the precursor membrane drying process 72 can be shortened.

In the precursor membrane drying process 72, the precursor membrane 67 is dried by a drier. Any type of the drier can be used for drying the precursor membrane 67. In this embodiment, a tenter is used. The tenter has a drying device and a plurality of holders (for example, clips). The precursor membrane 67 is dried while the membrane is conveyed with the holders holding both side edges of the membrane. Further detail about the tenter will be described later.

In the proton substitution process 76, the precursor membrane 67 contacts a solution of acid (acid solution) . According to this contact, the precursor in the precursor membrane 67 is substituted by the proton, and the precursor membrane 67 becomes the hydrogen-substituted membrane 75. Even in the case that the polymer of the chemical formula 3 where X is H is used as the material of the membrane, the proton conductivity of the membrane can be improved by the contact to the acid solution.

In the washing process 77, the acid solution attached on or contained in the hydrogen-substituted membrane 75 is washed by immersing the hydrogen-substituted membrane 75 into cleaning liquid. According to the washing process 77, the polymer and so on constituting the hydrogen-substituted membrane 75 can be prevented from being contaminated by acid with time. In this embodiment, single time of the washing process 77 is performed after the proton substitution process 76. However, for completely removing excess acid attached on the hydrogen-substituted membrane 75, plural times of the washing can be performed.

In addition, by the proton substitution process 76 and the washing process 77, impurities such as inorganic salt can be also removed from the hydrogen-substituted membrane 75. Accordingly, the solid electrolyte membrane 79 produced from the hydrogen-substituted membrane 75 is prevented from deterioration.

In the hydrogen-substituted membrane drying process 78, the hydrogen-substituted membrane 75 is sufficiently dried by a drier. Accordingly, the solid electrolyte membrane 79 with the superior proton conductivity can be obtained.

[Solid electrolyte membrane producing apparatus]

A membrane producing apparatus 33 used in a first embodiment of the present invention is shown in FIG. 3. The membrane producing apparatus 33 is designed for the solid electrolyte membrane producing process 60 (see FIG.2).

However, the configuration of the membrane producing apparatus 33 is one example, and does not limit the present invention. Hereinafter, the membrane producing apparatus 33 is described with following an example using the dope 24 including the polymer which is the precursor of the solid electrolyte.

The membrane producing apparatus 33 is provided with a casting chamber 80, a conveying chamber 81, a tenter 83, a liquid bath 84, a water bath 85, a drying chamber 86, a moisture controlling chamber 87 and a winding chamber 88. In the casting chamber 80, the dope 24 is cast on a support to form a casting membrane 61. In the conveying chamber 81, the casting membrane 61 is dried by a drier while it is conveyed according to movement of the support. In the tenter 83, a precursor membrane 67 which is obtained by peeling the casting membrane 61 from the support is further dried. In the liquid bath 84, proton substitution is applied to the precursor membrane 67, to generate a hydrogen-substituted membrane 75 from the precursor membrane 67. In the water bath 85, the hydrogen-substituted membrane 75 is washed. In the drying chamber 86, the hydrogen-substituted membrane 75 is dried to be a solid electrolyte membrane 79. In the moisture controlling chamber 87, amount of moisture in the solid electrolyte membrane 79 is controlled. In the winding chamber 88, the solid electrolyte membrane 79 with the controlled moisture is wound in a roll shape.

The membrane producing apparatus 33 is connected to the dope producing apparatus 10 through a stock tank 32. In the stock tank 32, a stirrer 91 rotated by a motor 90 is provided. The dope prepared in the dope producing apparatus 10 is stocked in the stock tank 32. By continuous rotation of the stirrer 91, precipitation and agglomeration of the solids in the dope 24 are prevented and the dope 24 can have uniformity. Note that additives may be mixed in the dope 24 while the stirring.

The casting chamber 80 is provided with a casting die 92 for casting the dope 24, and a belt 93 which is a support being transported. A precipitation hardened stainless steel is preferable for the material of the casting die 92. The material preferably has a coefficient of thermal expansion at most $2 \times 10^{-5}$ (°C $^{-1}$). Further, the material with the almost same anti-corrosion properties as SUS316 in examination of corrosion in electrolyte solution can also be used. Further, the material has the anti-corrosion properties which do not form pitting (holes) on the gas-liquid interface after having been immersed in a liquid mixture of dichloromethane, methanol and water for three months. Further, it is preferable to manufacture the casting die 92 by grinding the material which passed more than a month after casting. Thereby, the dope 24 flows inside the casting die 92 uniformly. Accordingly, streaks and the like in a casting membrane 61 are prevented, as will be described later. It is preferable that the finish precision of a contacting surface of the casting die 92 to the dope 24 is 1 $\mu$m or less of the surface roughness and the straightness is 1 $\mu$m/m or less in any direction. Clearance of the slit of the casting die 92 is automatically controlled in the range of 0.5mm to 3.5mm. A portion of the lip end of the casting die 92 contacting the dope is processed so as to have a constant chamfered radius R at 50 $\mu$m or less throughout the width of the casting die 81. Preferably, the casting die 92 is of a coat-hanger type.

A width of the casting die 92 is not limited. However, the width of the casting die 92 is preferably in the range between 1.1 times and 2.0 times larger than a width of the solid electrolyte membrane 79 as an end product. Further, it is preferable to install a temperature controlling device to the casting die 92 for maintaining a predetermined temperature of the dope 24 during the production of the membrane. Further, the casting die 92 is preferably provided with bolts (heat bolts) at predetermined intervals in the width direction of the casting die 92 for adjusting the thickness of the membrane, and an automatic thickness control mechanism which adjusts clearance of the slit by using the heat bolts. In the membrane production process, it is preferable to set a profile according to the flow volume of the pump 95 based on the previously set program. To accurately control the amount of the dope to be transported, the pump 95 is preferably a high-precision gear pump. Further, in the membrane producing apparatus 33, it is also possible to carry out a feedback control based on an adjustment program according to a profile of a thickness gauge, for instance, an infrared thickness gauge (not shown). The casting die 92 whose slit opening of the lip end is adjustable within a range of $\pm$ 50 $\mu$m is preferably used so as to maintain a difference in the thickness between two arbitrary positions on the solid electrolyte membrane 79 within 1 $\mu$m except for the side edges of the solid electrolyte membrane 79 as the end product.

Further, it is more preferable that lip ends of the casting die 92 are provided with a hardened layer. Methods for forming the hardened layer are not particularly limited. For instance, there are methods such as ceramic coating, hard chrome plating, and nitriding treatment. If the ceramic is used as the hardened layer, the ceramic which is grindable but not friable, with a lower porosity and the good corrosion resistance is preferred. The ceramic without affinity for and adherence to the dope 24 is preferable. For instance, as the ceramic, tungsten carbide, $Al_2O_3$, TiN, $Cr_2O_3$ and the like can be used, and especially tungsten carbide (WC) is preferable. A WC coating is performed in a thermal spraying method.

The dope 24 discharged to the lip end of the casting die 92 is partially dried and becomes solid. In order to prevent such solidification of the dope, a solvent supplying device (not shown) for supplying the solvent to the lip end is preferably disposed in the proximity of the lip end. The solvent is preferably supplied in a peripheral area of a three-phase contact line on which the lip ends contacts with the casting bead and the outside air. It is preferable to supply the solvent in the range from 0.1 mL/min to 1.0 mL/min to each of the bead edges so as to prevent the foreign matters such as impurities precipitated from the dope 24 or those outside the dope 24 from being mixed in the casting membrane 61. It is preferable to use a pump with a pulsation of 5% or less for supplying the solvent.

Between the stock tank 32 and a casting die 92, a filtration device 96 is provided. The filtration device 96 filtrates the dope 24 to remove foreign matters having the particle size larger than the predetermined value and those in gel-form. To remove the foreign matters, a filtration diameter of the filtration device 96 is preferably no more than 10μm.

The belt 93 provided below the casting die 92 is bridged across the rollers 97a and 97b, and is continuously transported by the driving and rotation of at least one of the rollers 97a and 97b. The casting belt 93 is endlessly goes around the casting chamber 80, the conveying chamber 81 and a tank described later.

The width of the belt 93 is not particularly limited. However, the width is preferably in a range of 1.1 times to 2.0 times larger than the casting width of the dope 24. Further, the length of the belt 93 is preferably 20m to 200m. The thickness of the belt 93 is preferably 0.5mm to 2.5mm. Further the belt 93 is preferably polished such that the surface roughness is 0.05 μm or less.

Material of the belt 93 is not particularly limited. For example, inorganic material such as stainless or a plastic film of organic material may be used. The plastic film is preferably nonwoven plastic fabric made of polyethylene terephthalate (PET) film, polybutylene terephthalate (PBT) film, nylon 6 film, nylon 6, 6 film, polypropylene film, polycarbonate film, polyimide film and the like. The belt 93 of a long length is preferable. It is preferable that the belt 93 has chemical stability against the solvent used. It is also preferable that the belt 93 is heat-resistant to endure the temperature of the membrane production. Note that in this embodiment, the PET film is used as the casting belt 93.

In order to keep a surface temperature of the rollers 97a, 97b at a predetermined value, it is preferable that a heat transfer medium circulating device is attached to the rollers 97a and 97b. A passage (not shown) for the heat transfer medium is formed in each of the rollers 97a and 97b. The temperature of the rollers 97a and 97b are kept at the predetermined value by passing the heat transfer medium kept at the predetermined temperature through the passages. The surface temperature of the belt 93 is properly set according to the type of the solvent, the type of the solid, the concentration of the dope and so forth.

Instead of the rollers 97a, 97b and the belt 93, it is also possible to use a casting drum (not shown) as the support. In this case, it is preferable that the casting rotates with a high precision such that the variation in the rotation speed is 0.2% or less. It is preferable that the polishing is made such that a surface roughness is 0.01 μm or less. It is preferable that the surface of the casting is hard chrome-plated which offers sufficient corrosion resistance and hardness. It is preferable to minimize the surface defect of the casting drum, the belt 93 and the rotation rollers 97a, 97b. Concretely, the number of pin holes whose diameter is 30 μm or more is preferably zero. The number of pinholes whose diameter is not less than 10 μm and less than 30 μm is preferably 1 or less per $1m^2$. The number of pinholes whose diameter is less than 10 μm is preferably 2 or less per $1m^2$.

A decompression chamber (not shown) is preferably provided in the upstream area from a casting bead. The casting bead is a ribbon-like shaped portion of the casting dope 24 formed between the casting die 92 and the casting belt 93. The expression "the upstream area from a casting bead" means the area upstream from the casting bead in the moving direction of the casting belt 93. The decompression chamber keeps a pressure at the upstream area from the casting bead lower than a pressure at the downstream area from the casting bead. In the proximity of the casting belt 93, an air blower (not shown) is provided for blowing air onto the casting membrane 61 to evaporate the solvent. It is preferable that an air shielding plate is provided for preventing the air which may damage the surface of the casting membrane 61 from blowing onto the casting membrane 61. In the casting chamber 80, a temperature controlling device and a condenser (both are not shown) are provided. The temperature controlling device keeps the temperature inside the casting chamber 80 at the predetermined value. The condenser condenses vapor of the organic solvent. A recovery device is preferably provided for recovering the condensed and liquefied organic solvent.

The drying device 98a is provided at downstream side from the casting die 92, near the transportation passage of the casting belt 93. The drying device 98a blows dry air toward the casting membrane 61. The dry air is controlled to satisfy the drying condition for the casting membrane 61. IF the casting membrane 61 absorbs the moisture in the air, it may cause separation of the layers and solidification of the membrane, and an increase in a percentage of voids. Because the casting membrane 61 right after being formed is easy to absorb the moisture, it is preferable that the humidity of the dry air is low. Particularly, the humidity is less than 50%RH, and especially it is less than 20%RH.

Inside the conveying chamber 81, there are the drying devices 98b to 98d each of which feeds dry air whose temperature is controlled to a predetermined value, for drying the casting membrane 61. It is preferable that the conveying chamber 81 is divided into plural areas and each of the drying devices 98b to 98d is attached to the corresponding area, for independently controlling the temperature and humidity in each area. The number of areas in the conveying chamber 81 is not limited, but it is preferable that the drying temperature inside the conveying chamber 81 is controlled in a range of 30°C to 60°C. Since the casting membrane 61 transported by the casting belt 93 is gradually dried, the change of shape of the membrane 62 such as wrinkles or slacks caused from rapid evaporation of the solvent is prevented. In addition, in the conveying chamber 81 there is a condenser 99 for recovering vaporized solvent caused while drying the casting membrane 61. The condenser 99 preferably has a recovery device for recovering the condensed (liquefied) organic solvent.

The drying device 98b is provided at upstream side in the conveying chamber 81 in the conveying direction of

the casting belt 93. The drying device 98c is provided at downstream side from the drying device 98b, and the drying device 98d is provided at downstream side from the drying device 98c, in the conveying chamber 81. The drying devices 98b to 98d feed the respective dry air toward the casting membrane 61. The blow direction of the dry air is approximately same as the moving direction of the casting membrane 61.

In addition, a coating device 100 is provided in the conveying chamber 81, between the drying device 98c and the drying device 98d, near the transportation passage of the casting belt 93. However, the position of the coating device 100 is not limited above, and may be the upstream side from the drying device 98b, between the drying devices 98b and 98c, or the downstream side from the drying device 98d. The coating device 100 has the same structure as the casting die 92, and is connected to the water bath 101. In the water bath 101, a contact poor solvent 200 is stored.

The water bath 101 is connected to a temperature controlling section 101a. The temperature controlling section 101a keeps the temperature of the contact poor solvent 200 in a predetermined range. The temperature range is preferably 10°C to 70°C. When the temperature of the contact poor solvent 200 is less than 10°C, the geletion cannot sufficiently performed. When the temperature of the contact poor solvent 200 is more than 70°C, the base is possibly deformed by rapid geletion.

In consideration of promotion of efficiency of the solid electrolyte membrane producing process, it is preferable that the contact poor solvent 200 is a compound having a property as the poor solvent to the polymer in the dope 24. More preferably, the compound has excellent solubility in the organic solvent 11a (see FIG.1). When a mixture of a compound which is the good solvent of the polymer and a compound which is the poor solvent of the polymer is used as the organic solvent of the dope, a compound having solubility in both the good solvent content and the poor solvent content is preferably used as the contact poor solvent 200. Although the organic solvent is not limited as long as it can dissolve the polymer, it is preferable that the boiling point of the solvent is as low as possible. As the concrete examples of the organic solvent 11a, there are lower alcohol, acetone and methyl acetate.

Water, aqueous solution of the organic solvent or the like is preferably used as the contact poor solvent 200. The water as the contact poor solvent is required not to include impurities. For example, pure water, distillated water and ion-exchanged water are preferably used. In this (the first) embodiment, the pure water is used as the contact poor solvent 200. Also, as the contact poor solvent 200, aqueous solution of compound which has the property as the good solvent to the polymer in the dope may be used. For example, when the good solvent of the precursor is DMSO, DMSO aqueous solution can be used as the contact poor solvent. Since the DMSO aqueous solution is used as the contact poor solvent, rate of extraction of the solvent in the solvent substitution can be controlled. In addition, a type of the DMSO aqueous solution having lower boiling point is preferably used. Concretely, it is preferable that weight ratio k of the water to the DMSO aqueous solution is in a range of 1% to 50%. The weight ratio k is represented as following formula: $100\times \{w1/(w1+w2)\}$. In the formula, w1 is the weight of the water included in the DMSO aqueous solution, and w2 is the weight of DMSO included in the DMSO aqueous solution. Note that as the contact poor solvent, an aqueous solution comprising two or more organic solvents may be used. Even when the polymer is the compound shown as the chemical formula 3, the contact poor solvent described above can be used. Particularly, the DMSO aqueous solution which can control the rate of extraction of the solvent is preferable.

It is preferable that the coating amount of the contact poor solvent 200 on one surface of the precursor membrane 67 is controlled in a range of $2ml/m^2$ to $100ml/m^2$, with use of the coating device 100. When the coating amount of the contact poor solvent 200 is less than $2ml/m^2$, the solvent substitution is possibly performed insufficiently and the precursor membrane 67 possibly misses to obtain the sufficient self-supporting property. When the coating amount of the contact poor solvent 200 is more than $100ml/m^2$, the precursor membrane 67 cannot be conveyed stably. Any known coater such as a slot die, a rod coater and a gravure coater may be used instead of the coating device 100. Note that in so-called online method, in which the contact poor solvent 200 is coated on the casting membrane 61 conveyed by the casting belt 93 for producing the solid electrolyte membrane, the coating device 100 or the slot die is suitable. Also, in consideration of the coating amount of the contact poor solvent 200 described above, the coating device 100 or the slot die is suitable.

A peeling roller 103 is provided near the transportation passage of the casting belt 93 outside the conveying chamber 81. The peeling roller 103 peels the casting membrane 61 having the self-supporting property from the casting belt 93, as the precursor membrane 67. The casting belt 93 from which the casting membrane 61 is peeled off is guided into the conveying chamber 81 by a guide roller.

In addition, a tank 105 is provided at downstream side from the peeling roller 103. The tank 105 has a guide roller 105a and a temperature controlling section 105b. The temperature controlling section 105b keeps the temperature of the substitution solvent 202 in the tank 105 at a predetermined value. By contact between the casting membrane 61 and the substitution solvent 202, the solvent substitution is performed between the substitution solvent 202 and the residual organic solvent in the casting membrane 61. For facilitating the solvent substitution, the temperature of the substitution solvent 202 is preferably kept in a range of 10°C to 70°C. The guide roller 105a removes the precursor membrane 67 from the substitution solvent 202, after the precursor membrane 67 peeled from the casting belt 93 is immersed in the substitution solvent 202.

Preferably used as the substitution solvent 202 is liquid which has excellent solubility in the residual solvent in the casting membrane 61 and can control the rate of extraction of the solvent. For example, pure water, ion-exchanged water, aqueous solution of compound which is good solvent of the polymer in the solvent content of the dope, and so on are preferably used. When the solvent of the dope is a mixture of the good solvent of the polymer and the poor solvent of the polymer, liquid having solubility in both the good solvent content and the poor solvent content is preferably used as the substitution solvent 202. For example, there are a mixture of water and the good solvent content, and a mixture of water and the poor solvent content. Note that the substitution solvent is not limited to substances used as the content of the dope, and for example acetone may be used as the substitution solvent. According to the solvent substitution process 70 (see FIG.2), the solvent substitution is performed in the casting membrane 61, and amount of the remaining solvent in the casting membrane 61 is reduced. In the precursor membrane 67 formed after the solvent substitution, there are still the solvent of the dope, the contact poor solvent and the substitution solvent. Accordingly, it is preferable that liquid with low boiling point is used as the substitution solvent. Since the substitution solvent with low boiling point is used, the boiling point of the residual solvent in the precursor membrane 67 is lowered and the residual solvent can be easily removed with short time in the precursor membrane drying process 72. In the first embodiment, the substitution solvent 202 is the pure water.

In the solvent substitution process, for the contact between the precursor membrane 67 and the substitution solvent 202, any method can be used. For example, the substitution solvent 202 may be coated or sprayed on the precursor membrane 67. Also, the precursor membrane 67 may be immersed in the substitution solvent 202. A time for contact between the precursor membrane 67 and the substitution solvent 202 is preferably no more than 10 minutes in the solvent substitution process 70. When the contact time is more than 10 minutes, thickness fluctuation of the dried solid electrolyte membrane 79 becomes large by expansion of moisture in the precursor membrane 67. Since the remaining solvent in the precursor membrane 67 in the solvent substitution process 70 is reduced by the self-supporting property developing process 66, generation of pores is prevented at the contact between the precursor membrane 67 and the substitution solvent 202 in the solvent substitution process 70 and the solid electrolyte membrane with few defects can be obtained.

At a position downstream side from the tank 105 and upstream side from the tenter 83, there is a pair of air showers 106 which have air outlets toward both surfaces of the precursor membrane 67. In the tenter 83, there are a drying device for feeding dry air and a plurality of clips 83a running accompany with movement of chains (not shown). An edge slitting device 107 for slitting the side edges of the precursor membrane 67 is provided at a position downstream from the tenter 83. In the edge slitting device 107, a crusher 107a is provided for crushing the side edges cut off from the precursor membrane 67 into chips.

A liquid bath 84 is provided at downstream side from the edge slitting device 107. In the liquid bath 84, liquid including acid (the acid solution) 204 is stored. The liquid bath 84 comprises a temperature controlling section 84a and a guide roller 84b. The temperature controlling section 84a keeps the temperature of the acid solution 204 in the liquid bath 84 at a predetermined value. The guide roller 84b removes the precursor membrane 67 from the acid solution 204, after the precursor membrane 67 is immersed in the acid solution 204. The precursor membrane 67 immersed in the acid solution 204 kept in the predetermined value becomes the hydrogen-substituted membrane 75 by the proton substitution.

The rate of the proton substitution is preferably as high as possible (100% is the most preferable). However, in this embodiment, when at least 80%, preferably at least 90% of the cation species are subject to the proton substitution, the solid electrolyte membrane can have required properties sufficiently. The proton substitution rate is a value calculated by following formula: $(y1/x1) \times 100$, when total number of the cation species for substitution is x1, and total number of hydrogen atoms used for substitution of the cation species is y1.

The acid solution 204 is not limited to acidic aqueous solution, but is required to give proton to proton acceptor. For example, in case that a compound used as the precursor has higher proton acceptability than an acid, the acid can be used for the acid solution 204.

When an acid whose anion has formula weight of 40 to 1000 is used as the acid solution 204, the anion hardly penetrated into the membrane and the proton substitution can be performed to the precursor membrane 67 with high efficiency. For example, there are sulfuric acid, phosphoric acid, nitric acid, hydrochloric acid, organic sulfone acid and so on. Especially, the sulfuric acid which is strong acid and has large formula weight is preferable.

The more the temperature of the acid solution 204 becomes higher, the more the proton substitution at the contact to the precursor membrane 67 is facilitated. Concretely, the temperature of the acid solution 204 is at least 30°C and no more than the boiling point thereof. For the contact between the precursor membrane 67 and the acid solution 204, any method can be used. For example, the acid solution 204 may be coated or sprayed on the precursor membrane 67. Also, the precursor membrane 67 may be immersed in the acid solution 204.

A water bath 85 is provided at downstream side from the liquid bath 84. In the water bath 85, water 206 as cleaning liquid is stored. The water bath 85 comprises a temperature controlling section 85a and a guide roller 85b. The temperature controlling section 85a keeps the temperature of the cleaning liquid 206 in the water bath 85 at a predetermined value. The guide roller 85b removes the hydrogen-substituted membrane 75 from the cleaning liquid 206, after the hydrogen-substituted membrane 75 is immersed in the cleaning liquid 206. To obtain high effect of washing the acid, the temperature of the cleaning liquid 206 is preferably at least 30°C and no more than the boiling point thereof.

The cleaning liquid 206 is preferably distilled water, pure water or ion-exchanged water which hardly includes dissolved oxygen and the like (close to theoretical pure water). The pure water in this specification is defined as water which has specific electric resistance at least 1MΩ, metal ion such as sodium, potassium, magnesium, calcium and the like of less than 1ppm, and anion such as chlor and nitric acid of less than 0.1ppm. The pure water can be easily obtained by one or combination of reverse osmosis membrane, ion-exchange resin, distillation and so on. Note that the hydrogen-substituted membrane 75 is not required to be immersed in the cleaning liquid 206 in the water bath 85, and the cleaning liquid 206 may be coated or sprayed on the hydrogen-substituted membrane 75 as long as the surface of the hydrogen-substituted membrane 75 can be cleaned. The washing process 77 and the cleaning liquid 206 are described in detail later.

There is the drying chamber 86 at a position downstream side from the water bath 85. In the drying chamber 86, there are a plurality of pass rollers 127, an absorbing device 128 for recovering the evaporated solvent in the drying chamber 86, and a drying device (not shown) for feeding dry air. In the moisture controlling chamber 87 provided at a position downstream side from the drying chamber 86, there are the pass rollers 127 same as in the drying chamber 86, and a temperature controller and a moisture controller (both are not shown). At a position downstream side from the moisture controlling chamber 87, preferably there is a neutralization device (not shown) such as a neutralization bar, for controlling the charged voltage of the hydrogen-substituted membrane 75 in a predetermined range (for instance from - 3kV to +3kV). In addition, it is preferable that a knurling roller pair (not shown) is provided for embossing the both side edges of the hydrogen-substituted membrane 75. Inside the winding chamber 88, a winding roll 130 and a press roller 131 are provided. The winding roll 130 winds up the solid electrolyte membrane 79. The press roller 131 controls the tension of the membrane 79 at the time of winding.

Next, an example of a method for producing the solid electrolyte membrane 79 with use of the membrane producing apparatus 33 will be described.

The dope 24 stocked in the stock tank 32 is fed into the filtration device 96 by the pump 95. In the filtration device 96, impurities which cause reduction of properties, especially the proton conductivity, of the solid electrolyte membrane 79 are removed from the dope 24.

Then the filtrated dope 24 is fed into the casting die 92 and cast onto the belt 93 from the casting die 92. It is preferable that the rollers 97a and 97b are driven so as to adjust the tension of the belt 93 in a range of $10^3$ N/m and $10^6$ N/m. It is preferable to adjust the relative positions of the rollers 97a, 97b or the rotation speed of at least one of the rollers 97a, 97b. Moreover, a relative speed difference between the belt 93 and the rollers 97a and 97b are adjusted to be 0.01m/min or less. At the casting of the dope, the casting amount of the dope 24 is determined according to the concentration of the dope 24 and the required thickness of the membrane product.

Preferably, speed fluctuation of the belt 93 is 0.5% or less, and meandering thereof caused in a width direction while the belt 93 makes one rotation is 1. 5mm or less. In order to control the meandering, it is more preferable to provide a detector (not shown) and a position controller (not shown) to perform feedback control of the position of the belt 93. The detector detects the positions of both sides of the belt 93. The position controller adjusts the position of the belt 93 according to a measurement value of the detector. With respect to a portion of the belt 93 located directly below the casting die 92, it is preferable that vertical positional fluctuation caused in association with the rotation of the belt 93 is adjusted to be 200 μm or less. Further, it is preferable that the temperature in the casting chamber 80 is adjusted within a range of -10°C and 57°C by a temperature controlling device (not shown). Preferably the solvent vapor in the casting chamber 80 is collected by the recovery device 99 and is recycled and reused as the dope for preparing the solvent, in consideration of reducing the manufacturing cost and so on.

In order to stabilize the casting bead, it is preferable that the upstream area from the casting bead in the transporting direction of the casting die 92 is decompressed by the decompression chamber to achieve a predetermined pressure value. Preferably, the upstream area from the casting bead is decompressed within a range of -2500Pa and -10Pa relative to the downstream area from the casting bead. Moreover, it is preferable that a jacket (not shown) is attached to the decompression chamber to maintain the inside temperature at a predetermined value. Further, it is preferable to attach a suction unit (not shown) to an edge of the casting die 92 in order to keep a desired shape of the casting bead. A preferable range of air volume aspirated in the edge portion is 1L/min to 100L/min.

The casting membrane 61 on the casting belt 93 is moved by driving the rollers 97a and 97b which endlessly move the casting belt 93. In the casting chamber 80 and the conveying chamber 81, the organic solvent contained in the casting membrane 61 is evaporated by the dry air fed from the drying devices 98a to 98d. When the dry air contacts the casting membrane 61, the temperature of the dry air is preferably in a range of 30°C to 100°C, particularly in a range of 20 °C to 70 °C. In this embodiment, the temperature of the dry air is controlled such that an average temperature at the vicinity of the casting membrane 61 becomes 45°C.

When the casting membrane 61 on the casting belt 93 is dried, the moisture is controlled to as possible as low. To control the moisture, a moisture controller commercially available may be provided inside the casting chamber 80 or

the conveying chamber 81. The type of the moisture controller and the providing position is not limited. In addition, the condenser 99 condenses the vaporized solvent in the conveying chamber 81 and collects it.

In the coating device 100, the contact poor solvent 200 stored in the water bath 101 contacts the casting membrane 61 conveyed by the casting belt 93. Accordingly, the solvent substitution is performed between the contact poor solvent 200 and the organic solvent in the casting membrane 61. Since the contact poor solvent 200 which has lower boiling point than the good solvent content in the casting membrane 61 contacts the casting membrane 61, the casting membrane 61 becomes gel-like form (gelation) . Accordingly, the casting membrane 61 becomes to have the self-supporting property and it can be easily peeled off from the casting belt 93. Further, the solvent content of the dope can be evaporated with the contact poor solvent 200 at the process for drying the precursor membrane 67. In addition, since content of the good solvent contained in the casting membrane 61 becomes larger than content of the poor solvent, rate of low boiling point content in weight of the whole solvent becomes larger. Accordingly, the casting membrane 61 is sufficiently dried in the temperature which is not so high and is in a revel required for evaporating the water.

As described above, the self-supporting property is given to the casting membrane 61 by the solvent substitution with use of the contact poor solvent 200 and the drying process with use of the drying device 98a to 98d. Accordingly, the modulus of elasticity of the casting membrane 61 becomes a degree for enabling to peel the membrane 61 from the casting belt 93.

The peeling roller 103 peels the casting membrane 61 as the precursor membrane 67 from the casting belt 93. The casting belt 93 after the casting membrane 61 being peeled from thereon is fed into the casting chamber 80 again, because the belt 93 is moved endlessly by the rollers 97a and 97b. The guide roller 105a guides the precursor membrane 67 into the pure water which is the substitution solvent 202. By the contact between the precursor membrane 67 and the pure water, the solvent substitution is performed between the pure water and the organic solvent contained in the casting membrane 61. The pure water has compatibility to the organic solvent contained in the casting membrane 61, which enables to perform the solvent substitution.

In the case that the solvent of the dope for casting is the mixture of the good solvent content and the poor solvent content and content of the good solvent is at least 100 wt.% to the precursor, it is preferable that the precursor membrane 67 after the contact to the contact poor solvent 200 and the substitution solvent 202 has the good solvent content whose weight is less than 100% to the weight of the precursor. Accordingly, the following drying process can be done in a short time.

The total contact time of the casting membrane 61 and the precursor membrane 67 to the contact poor solvent 200 and the substitution solvent 202 is preferably no more than 10 minutes, particularly in a range of 30 seconds to 10 minutes, and especially in a range of 1 minute to 5 minutes. In the present invention, when the total contact time becomes over 10 minutes, water volume in the precursor membrane becomes too large and the precursor membrane 67 becomes largely swelled. In addition, it is possible that drying time at later process needs to be longer. When the total contact time is less than 30 seconds, the substitution of the solvent cannot be sufficiently performed and the gelation cannot be promoted sufficiently. Accordingly, it is possible that the peeling of the membrane from the support becomes difficult and the continuous membrane production cannot be performed, or the reduction of the drying time becomes difficult.

By the guide roller 105a, the precursor membrane 67 is fed out from the tank 105. The air shower 106 blows air to the surface of the precursor membrane 67, to remove moisture on the surface of the precursor membrane 67. The precursor membrane 67 is fed into the tenter 83. In the tenter 83, the clips 83a hold the both side edges of the precursor membrane 67 and move according to the movement of the chains. While this conveyance of the precursor membrane 67, the dry air whose temperature is controlled to the predetermined value contacts the precursor membrane 67, to promote the drying of the precursor membrane 67. Note that pins can be used instead of the clips 83a. The pins penetrate the both side edges of the precursor membrane 67 to hold it. It is preferable that the temperature of the dry air is controlled such that inside temperature of the tenter 83 becomes in a range of 80°C to 150°C. In the first embodiment, the inside temperature of the tenter 83 is controlled to be approximately 120°C. This temperature can be lowered when the contact poor solvent 200 and the substitution solvent 202 having lower boiling point are used. It is preferable that inside the tenter 83 is divided into four areas, and drying condition in each area is independently controlled. In the drying in the tenter 83, the remaining solvent in the precursor membrane 67 becomes approximately 10 wt.% (dry measure). The remaining solvent in the dry measure is calculated by following formula: $\{(x2-y2)/y2\}\times 100$, when a weight of a sampling membrane at sampling is represented as x2, and a weight of the sampling membrane after dried is represented as y2.

In the tenter 83, the precursor membrane 67 can be stretched in the width direction. By controlling the tension in the conveying direction applied to the precursor membrane 67 before fed into the tenter 83, the precursor membrane 67 can be stretched in the conveying direction. In case that the precursor membrane 67 is stretched, the membrane 67 is preferably stretched in at least one of the casting direction and the width direction by 100.5%-300% with respect to the size of the membrane 67 before the stretching. Accordingly, molecular orientation in the precursor membrane 67 can be controlled.

The precursor membrane 67 is fed into the edge slitting device 107, where the both side edges of the membrane 67 are cut off. Since the portion damaged by the clips are cut off, planarity of the precursor membrane 67 can be

increased. The cut edges are sent to the crusher 107a by a cutter blower (not shown). The membrane side edges are shredded into chips by the crusher 107a. When the chips are recycled as polymer material for preparing the dope, the material is efficiently utilized and the production cost is reduced. The slitting process for the membrane side edges may be omitted. However, it is preferable to perform the slitting process at a time after the peeling of the precursor membrane 67 (from the support) and before the winding of the membrane.

The precursor membrane 67 is fed into the liquid bath 84, where the precursor membrane 67 is immersed into the sulfuric acid aqueous solution as the acid solution 204. Accordingly, the polymer content of the precursor membrane 67 is subjected to the proton substitution, to be the hydrogen-substituted membrane 75. It is preferable that the acid solution uniformly contacts the precursor membrane 67.

Next, the hydrogen-substituted membrane 75 after the sufficient proton substitution is fed into the water bath 85 and immersed into the pure water in the water bath 85. Accordingly, the sulfuric acid aqueous solution excessively attached on the hydrogen-substituted membrane 75 can be removed.

Then the hydrogen-substituted membrane 75 is fed into the drying chamber 86. In the drying chamber 86, while the hydrogen-substituted membrane 75 hanged on the pass rollers 127 is conveyed, the drying device feeds the dry air for drying the hydrogen-substituted membrane 75. The temperature inside the drying chamber 86 is not particularly limited. However, it is preferable to determine the temperature according to the heat resistance (glass transition point Tg, heat deflection temperature under load, melting point Tm, continuous working temperature and the like) of the solid electrolyte, and the temperature is preferably not more than the Tg. In the present invention, the temperature inside the drying chamber 86 is preferably not less than 120°C and not more than 185°C. The solid electrolyte membrane 79 is preferably dried until the remaining solvent reaches less than 10 wt.% (dry measure). The solvent vapor generated by drying the solid electrolyte membrane 79 in the drying chamber 86 is adsorbed and recovered by the absorbing device 108. The air from which the solvent is removed is supplied to the drying chamber 86 as the dry air.

The drying chamber 86 is preferably divided into plural sections so as to change the temperature of the dry air in each section. It is also preferable to provide a predrying chamber (not shown) between the edge slitting device 107 and the drying chamber 86 to predry the hydrogen-substituted membrane 75. Thereby, in the drying chamber 86, an abrupt increase of the membrane temperature is prevented so that changes in shape and conditions of the hydrogen-substituted membrane 75 are prevented and the solid electrolyte membrane 79 with few changes in shape is obtained.

In a case that the contact poor solvent 200 and the substitution solvent 202 have the same property, while the membrane is immersed in the solvent, the solvent contacting process 66b, the peeling process 68 and the solvent substitution process 70 can be performed. This case is described later as a second embodiment. In this method, required time for producing the solid electrolyte membrane 79 can be further reduced.

In the above embodiment, although the casting membrane drying process 66a and the solvent contacting process 66b are performed in the self-supporting property developing process 66, the casting membrane drying process 66a can be omitted. However, for performing whole the self-supporting property developing process 66 in a short time, it is preferable to perform the casting membrane drying process 66a, in consideration of giving the self-supporting property to the casting membrane 61.

Although the contact poor solvent 200 is coated on the casting membrane 61 with use of the coating device 100 in the solvent contacting process 66b, the contact poor solvent 200 may be sprayed on the casting membrane 61. In addition, the drying device 98d for drying the casting membrane 61 after the contact to the contact poor solvent 200 can be omitted. The drying of the casting membrane 61 with use of the drying device 98d is effective as long as the good solvent of the polymer in the casting membrane 61 can be further removed. However, in case the contact poor solvent 200 in the casting membrane 61 is vaporized by the drying device 98d, the drying of the casting membrane 61 after the contact to the contact poor solvent 200 is preferably not preformed.

In the washing process, the hydrogen-substituted membrane is immersed in the cleaning liquid. However, the washing method is not particularly limited to the above as long as the method is capable of removing the acid by contacting the hydrogen-substituted membrane to the cleaning liquid. For instance, it is also possible to coat or spray the cleaning liquid onto the surface of the hydrogen-substituted membrane. Such methods are preferable because they are applicable while the hydrogen-substituted membrane is being transported continuously.

The cleaning liquid can be coated or sprayed by a method using an extrusion coater or various coating heads such as a fountain coater or a frog mouth coater, or a method using a spray nozzle which is commonly used for humidification of air, painting, automatic washing of a tank and so forth. These spraying methods are disclosed in "All about coating", edited by Masayoshi Araki, published by Kako Gijutsu Kenkyukai (Converting Technical Institute), 1999, and are also applicable to the present invention. Further, as the spray nozzle, conical or sector spray nozzles manufactured by Ikeuchi Co., Ltd. or Spraying Systems Co., Ltd. can be arranged along a thickness direction of the membrane so as to hit water stream to the entire width.

As the velocity of spraying the cleaning liquid becomes higher, the washing effect becomes higher. However, such washing processing during the continuous transportation of the hydrogen-substituted membrane may cause the reduction in the transportation stability. For that reason, it is preferable to spray the cleaning liquid at a velocity of 50

cm/s to 1000 cm/s, more preferably 100 cm/s to 700 cm/s, and most preferably 100 cm/s to 500 cm/s.

The amount of the cleaning liquid needs to be larger than the calculated amount based on a theoretical dilution ratio defined by a following equation (1). The theoretical dilution ratio is defined on the assumption that the whole amount of the cleaning liquid for washing contributes to dilution of the acid solution. Actually, since the whole amount of the cleaning liquid does not contribute to form a mixture, a larger amount of the cleaning liquid than that derived from the theoretical dilution ratio is used in practice. The amount of the cleaning liquid varies depending upon the acid concentration of the acid solution and a type of solvent in the acid solution; however, the cleaning liquid is used in an amount providing a dilution ratio of at least 100 to 1000 times, preferably 500 to 10,000 times, and more preferably 1,000 to 100,000 times. Note that in the equation (1), the amount of each of the cleaning liquid and the acid solution is a liquid amount which contacts a unit area of the membrane.

[Equation (1)]

$$\text{Theoretical dilution ratio} = (\text{amount of washing liquid } [cc/m^2]) \div (\text{amount of acid solution } [cc/m^2])$$

When a predetermined amount of the cleaning liquid 206 is used for washing, it is preferable to divide the predetermined amount of the cleaning liquid 206 into several portions and wash the hydrogen-substituted membrane several times rather than to use the whole amount of the cleaning liquid at a time for contacting the hydrogen-substituted membrane. In this case, appropriate time intervals and distances are preferably provided between the above washing devices so as to diffuse the cleaning liquid on the membrane to dilute the acid solution. Further, it is preferable to incline the hydrogen-substituted membrane being transported to spread the cleaning liquid along the membrane surface so as to mix and dilute the cleaning liquid and the acid solution in addition to the diffusion on the membrane. The most preferable method is to remove the water from the surface of the solid electrolyte membrane by providing a water remover between the washing devices. This method can increase the efficiency of the dilution of the acid solution. As the water remover, for instance, blades, an air knife, rolls or the like are used. The washing effect increases as the number of water bathes provided along the transportation passage increases. However, in consideration of space and cost for installing washing devices, the number of water bathes is preferably 2 to 10, particularly 2 to 5.

Among the above, the air knife is most preferable for the water remover since the air knife removes water most efficiently. By adjusting air flow volume and air pressure of the air blown onto the solid electrolyte membrane, the air knife removes the remaining moisture content on the surface of the membrane almost completely. However, if the air flow volume is too large, flutter or tilt may occur in the membrane which adversely affects the transporting stability. For that reason, the airflow volume is preferably in a range of 10m/s to 500m/s, more preferably, 20m/s to 300m/s, and most preferably, 30m/s to 200m/s. Note that the above air flow volume is not particularly limited. The air flow volume is properly determined according to the moisture content on the surface of the membrane before using the water remover, the transporting speed or the like.

To uniformly remove the moisture content on the surface of the solid electrolyte membrane, a variation range in the airflow velocity distribution in the width direction of the membrane is preferably set at 10% or less, and more preferably 5% or less by adjusting the outlet of the air knife or the air supplying method of the air knife. The closer the clearance between the surface of the solid electrolyte membrane and the outlet of the air knife, the more moisture content on the surface of the membrane is removed. However, at the same time, the possibility to damage the surface of the solid electrolyte membrane by the outlet of the air knife also increases. Accordingly, the air knife is installed such that the clearance between the surface of the solid electrolyte membrane and the outlet of the air knife is in a range of **10 μm** to 10cm, more preferably ***100 μm*** to 5cm, and most preferably **500 μm** to 1cm. It is preferable to install the air knife and a backup roll on opposite sides of the washing surface of the solid electrolyte membrane. The backup roll supports the membrane so as to stabilize the clearance setting and reduce the flutters, wrinkles and deformations of the membrane.

For the cleaning, pure water is preferably used as the cleaning liquid. The pure water in this specification is defined as water which has specific electric resistance at least 1MΩ, metal ion such as sodium, potassium, magnesium, calcium and the like of less than 1ppm, and anion such as chlor and nitric acid of less than 0.1ppm. The pure water can be easily obtained by one or combination of reverse osmosis membrane, ion-exchange resin, distillation and so on. Especially, the cleaning liquid is preferably ultra pure water which hardly includes dissolved oxygen and the like (close to theoretical pure water). In addition, to obtain the high effect of removing the acid from the membrane, the temperature of the cleaning liquid is preferably at least 30°C and no more than the boiling point thereof, particularly in a range of 30°C to 120°C. However, the temperature of the water is not limited as long as the temperature is in a range from approximately room temperature to the boiling point. In this embodiment, the acid on the precursor membrane 65 is removed by immersing the membrane into warm water of 30°C.

Since the acid process and the washing process are performed as described above, impurities such as inorganic

salt contained in the casting membrane at the time of forming the membrane can be removed. Accordingly, the obtained membrane is prevented from being deteriorated by the impurities. Note that metal content in the membrane after the acid process and the washing process is preferably no more than 1000ppm, particularly no more than 100ppm. As metals for being measured, there are Na, K, Ca, Fe, Ni, Cr, Zn and so on. The metal content thereof can be measured for example with use of an atomic absorptiometer commercially available.

In the first embodiment, instead of the polymer which is the precursor of the solid electrolyte, the polymer which is the solid electrolyte can be used for producing the solid electrolyte membrane. In this case, the proton substitution process 76 and the washing process 77 in the solid electrolyte membrane producing process can be omitted. However, in view of improving the proton conductivity, there processes are preferably performed.

The solid electrolyte membrane 79 is transported into the moisture controlling chamber 87. In the moisture controlling chamber 87, temperature and moisture is controlled so that the solid electrolyte membrane 79 transported with being hanged on the rollers 127 can have desired temperature and moisture conditions. Although the inside temperature and moisture of the moisture controlling chamber 87 are not limited, it is preferable that the temperature is in a range of 20°C to 30°C and the moisture is in a range of 40RH% to 70RH%. According to this process, the solid electrolyte membrane 79 is prevented from having curls on its surface and the winding process is prevented from causing a defect. Note that it is preferable that a cooing chamber (not shown) is provided between the drying chamber 86 and the moisture controlling chamber 87 for cooling the solid electrolyte membrane 79 to approximately room temperature, so as to prevent a generation of shape variation in the solid electrolyte membrane 79 by temperature change.

In a case that knurling is provided on the solid electrolyte membrane 79 after the moisture control, the height of each of projections and depressions formed by the knurling is preferably in a range of 1 $\mu$m to 200 $\mu$m.

The solid electrolyte membrane 79 is fed into the winding chamber 88, where the membrane is wound around a winding roll 130 with a tension being applied on the membrane by a press roller 131. Accordingly, a roll of the solid electrolyte membrane 79 without wrinkles and twitches can be obtained. Thereby the use of the press roller 131 is preferable to obtain the roll product with superior planarity. It is preferable to gradually change the tension applied to the membrane from the start to the end of the winding so that excessive tightening during the winding is prevented. A width of the solid electrolyte membrane 79 is preferably 100mm or more. The present invention is also applicable to the production of thin membranes with the thickness in a range of 5 $\mu$m to 300 $\mu$m.

During each process or between the above processes in the membrane producing apparatus 33, the precursor membrane 67, the hydrogen-substituted membrane 75 and the solid electrolyte membrane 79 are mostly supported or transported by using the rollers. There are driving rollers and non-driving rollers. The non-driving rollers are used for determining the transportation passage of the membrane and improving the transportation stability during the transportation of the membrane.

In FIG. 4, a membrane producing apparatus 233 of the second embodiment of the present invention is shown. In FIG.4, there are the devices and members which are the same as those used in the first embodiment. Therefore, the numerals same as in FIG.3 are applied them and the descriptions of them are omitted. In addition, each component positioned at upstream side from a conveying chamber 281, each component positioned at downstream side from the drying chamber 86, and each component inside the casting chamber 80 are the same as those used in the membrane producing apparatus 33 shown in FIG.3. Therefore, illustrations of these components are omitted. The membrane producing apparatus 233 comprises the casting chamber 80, a conveying chamber 281, a liquid bath 215, the tenter 83, an acid processing chamber 288 and the drying chamber 86. In the casting chamber 80, the casting membrane 61 is formed from the dope fed from a solution sending line L1. The conveying chamber 281 contains the casting chamber 80, and dries the casting membrane 61 with use of the drying devices 93b to 93d positioned near the transportation passage of the casting membrane 61. In the liquid bath 215, the casting membrane 61 and a precursor membrane 267 (which is the casting membrane 61 peeled from the support) are subject to the solvent contacting process 66b (see FIG. 2) and then the precursor membrane 267 is subject to the solvent substitution process 70 (see FIG.2). In the acid processing chamber 288, the proton substitution process 76 (see FIG.2) and the washing process 77 (see FIG.2) are performed.

The casting belt 93 is endlessly conveyed around the casting chamber 80 and the liquid bath 215. An air shielding plate may be provided for the drying devices 98b to 98d arranged along the moving direction of the casting belt 93, so as to prevent air which may damage the surface of the casting membrane 61 from directly blowing onto the casting membrane 61.

In the liquid bath 215, there are a roller 210 for supporting the casting belt 93 for peeling the casting membrane 61 from the casting belt 93, and guide rollers 215a for supporting the precursor membrane 267. The liquid bath 215 has the approximately same construction as the tank 105 (see FIG.3) of the first embodiment, except of the existence of the roller 210. Note that the roller 210 may be a driving roller or a non-driving roller.

In the liquid bath 215 at the downstream from the conveying chamber 82, contact liquid 216 for contacting the casting membrane 61 is stored. In addition, a contact liquid circulation refining device (not shown) is provided for the liquid bath 215, so that the contact liquid 216 is discharged outside the liquid bath 215, refined and charged back to the

liquid bath 215. The contact liquid 216 has the functions of both the contact poor solvent 200 (see FIG.3) and the substitution solvent 202 (see FIG. 3) . The contact liquid 216 substitutes for the solvent in the casting membrane 61, and performs the gelation of the casting membrane 61. In this specification, the gelation (gel-like form) means a state that the casting membrane becomes hard since the solvent and the contact liquid 215 are sustained in molecular chains of the precursor and lose their fluidity. In this way, the casting membrane 61 obtains the self-supporting property also by the gelation.

A liquid having a lower boiling point than the solvent of the dope 24 and being soluble to the solvent is used as the contact liquid 216. Since the boiling point of the contact liquid 216 is lower than the solvent, the drying process at the tenter 83 and the drying chamber 86 can be performed effectively and efficiently. Since the contact liquid 216 is soluble to the solvent, the solvent contained in the casting membrane 61 is effectively and efficiently substituted, and thereby accelerating the speed of the gelation which results in, for example, shortening the time for the solvent contacting process and the solvent substitution process, and shortening the length of the transportation passage in the liquid bath 215.

When the solvent of the dope 24 is a mixture, a liquid soluble to the solvent component which satisfies at least one of the following conditions is preferable as the contact liquid 216: the one having the highest boiling point, the one having the highest affinity (compatibility) with the precursor, and the one having the highest proportion in the mixture. When the dope 24 is a mixture of a compound which is a good solvent and a compound which is a poor solvent, a liquid soluble to both compounds is preferably used as the contact liquid 216. When the DMSO and the methyl alcohol are used as the solvent components of the dope 24, water is preferably used as the contact liquid 216. Also, instead of the water, an aqueous solution of the good solvent component of the dope may be used as the contact liquid 216.

In the acid processing chamber 288, there are a coating die 211 for coating an acid solution 204 on the precursor membrane 267, and the plurality of the water bathes 85. By the rollers, the precursor membrane 267 is guided to the coating die 211 and the water bathes 85 in this order. In FIG. 4, two of the water bathes 85 are illustrated. However, the number of the water bathes 85 may be more than two.

The coating die 111 has a configuration similar to the casting die 92 (see FIG.3). The coating die 111 casts the acid solution 204 fed from a tank 218 for coating one surface of the precursor membrane 267. The tank 218 is provided with a temperature controlling section (not shown) for the acid solution 204. The temperature of the acid solution 204 is kept at a predetermined value by this temperature controlling section. A heater may be provided near the transportation passage, between the coating die 211 and the water bath 85. The heater heats the precursor membrane 67 on which the acid solution 204 is coated. Note that although the acid solution contacts the precursor membrane by the coating in the second embodiment, the contact method is not limited to this. For example, the immersion of the precursor membrane into the acid solution (described in the first embodiment) or the spraying of the acid solution on the precursor membrane method may be performed instead of the coating.

In the case that the solid electrolyte membrane is produced by such membrane producing apparatus 233, the conveying chamber 281 does not perform positively evaporation of large amount of the good solvent. The reason is that since the good solvent normally has the high boiling point as described above and tends to remain in the casting membrane 61, deformation of the casting membrane 61 possibly occurs when the evaporation of the good solvent is forcedly performed. When the poor solvent is used as the solvent component of the dope 24, it is preferable that the poor solvent is not completely evaporated in the conveying chamber 281. The reason is that by leaving the poor solvent remained in the casting membrane 61 in the liquid bath 215, molecular networks of the polymer are easily formed. Owing to this, a speed of the solvent substitution between the contact liquid 206 and the good solvent content in the casting membrane 61 in the liquid bath 215 (described later) becomes fast. It is preferable to set up the condition of the conveying chamber 281, especially the condition of the drying devices 98b to 98d, such that weight percentage of the poor solvent content to that of the polymer is in a range of 2% to 100%, and more preferably in a range of 2% to 70%. Thus, the drying in the conveying chamber 281 is proceeded to the extent that the casting membrane 61 is not deformed when being contacted to the contact liquid 206. In the second embodiment, the solvent removal from the casting membrane 61 is mainly performed in the following liquid contacting process.

The temperatures of the dry air from the drying devices 98b to 97d are set lower than the temperatures of the dry air in the tenter 83 and the drying chamber 86 in the downstream side. The temperatures of the dry air from the drying devices 98b to 97d are preferably less than 100°C, more preferably in a range of 20°C to 70°C, and most preferably about 45°C. When absorbing water, the casting membrane 61 may turn into a gel-like form with phase separation. At this time, the obtained solid electrolyte membrane will have a large percentage of voids. In view of this, it is preferable that the humidity in the proximity of the casting membrane 61 is kept as low as possible. It is especially preferable that the just-formed (newer) casting membrane 61 is transported under lower humidity condition than the time-passed (older) casting membrane 61. Accordingly, the humidity of the dry air from the drying devices 98b to 98d is preferably less than 50 %RH, more preferably less than 20 %RH, and most preferably less than 10 %RH.

It is preferable that a relation between the drying condition of the casting membrane 61 and the evaporation degree of the good and poor solvent contents of the casting membrane 61 is determined prior to the membrane production. For example, a transporting speed of the casting membrane 61, temperature and humidity, flow amount, rate and direction

of the dry air supplied from the drying devices 98b to 98d, and the like are designated as factors of the drying condition. Temporal changes of relations between these factors and the remaining amount and component of the solvent in the casting membrane 61 are obtained (calculated or measured). Based on the obtained relations, the drying condition of the casting membrane 61 in the transporting chamber 281 is determined.

The casting membrane 61 on the belt 93 is transported to and immersed in the contact liquid 216 in the liquid bath 215. The casting membrane 61 is then peeled from the belt 93 by the roller 215a as the precursor membrane 267. The casting membrane 61 is not necessarily peeled in the contact liquid 216 like the present embodiment, but may be peeled anywhere after the casting membrane 61 obtains the self-supporting property. For example, the casting membrane 61 may be peeled at downstream from the liquid bath 215, or between the liquid baths 215 when plural baths 215 are arranged in series. Note that the casting membrane 61 is preferably peeled from the belt 93 as soon as the casting membrane 61 obtains the self-supporting property, so that the substitution of the contact liquid 216 for the solvent in the casting membrane 61 is performed on the both surfaces of the casting membrane 61 as soon as possible. For this configuration, the solvent substitution can be efficiently performed.

In the second embodiment, the temperature of the contact liquid 216 is preferably in a range of 10°C to 80°C, and more preferably in a range of 20°C to 50°C. When the temperature of the contact liquid 216 is higher than 80°C, wrinkles may be formed on the casting membrane 61 or the precursor membrane 67. When the temperature of the contact liquid 216 is lower than 10°C, the solvent substitution between the contact liquid 216 and the solvent contained in the casting membrane 61 may not be performed efficiently.

The time for immersing the casting membrane 61 into the contact liquid 206 is approximately 30 sec to 10 min, and more preferably 1 min to 5 min. Owing to this, the substitution between the contact liquid 216 and the solvent contained in the casting membrane 61 is sufficiently performed, and thereby the self-supporting property of the casting membrane 61 is exerted. The time taken for the immersion is determined in accordance with at least one of the change in hardness of the casting membrane 61 and the change in weight of the solvent in the casting membrane 61. Therefore the immersion time is not necessarily limited to the above range.

The method of contacting the casting membrane 61 and the contact liquid 216 is not limited to the immersion. For example, the contact liquid 216 may be sprayed or coated onto the casting membrane 61. The contact liquid 216 may be evaporated and brought into contact with the casting membrane 61 as the vapor. It is also possible to combine these methods and the immersion method.

The process of contacting the contact liquid 216 to the casting membrane 61 and the precursor membrane 267 may be performed several times. For example, the liquid baths 215 are arranged in series, and the casting membrane 61 and the precursor membrane 267 which has been peeled are sequentially transported into the liquid baths 215. When this process is performed several times, it is preferable that the contact liquid is different from bath to bath. Thereby, the drying of the precursor membrane 267 can be performed effectively and efficiently in the tenter 83 and the drying chamber 86.

The precursor membrane 267 is transported in a predetermined direction by the guide rollers. On the other hand, the belt 93 from which the casting membrane 61 has been peeled is fed into the casting chamber 80 again by the rotation of at least one of the rollers 97a and 97b (see FIG.3).

As same as in the first embodiment, the acid solution 110 is coated by the coating die 111 onto one surface of the precursor membrane 267 whose side edges are cut off by the edge slitting device 107. In case the coated precursor membrane 267 is heated by a heater (not shown), the temperature of the precursor membrane 267 preferably becomes in a range of 80°C to 100°C. Thereafter, the proton substitution is performed to the precursor membrane 267 effectively and efficiently, and the precursor membrane 267 becomes a hydrogen-substituted membrane 275 containing the acid solution.

Each process in the first embodiment and each process in the second embodiment can be combined. For example, it may be that the drying process in the tenter and the former processes are performed according to the first embodiment and the later processes are performed according to the second embodiment. It may be also that the drying process in the tenter and the former processes are performed according to the second embodiment and the later processes are performed according to the first embodiment. The first and second embodiment, the long solid electrolyte membrane is produced by continuous casting. However, the present invention is not limited above. For example, a sheet-like solid electrolyte membrane can be produced by dropping and stretching a dope on a rectangular support to form a casting membrane, dipping the casting membrane with the support into water to perform the solvent substitution, and peeling the membrane to be dried. In this case, the sheet-like solid electrolyte membrane with high quality can be produced with lesser self-supporting property compared to the production of the long solid electrolyte membrane. The drying time can be also reduced as well as in the production of the long solid electrolyte membrane, so that the solvent of the dope can be removed from the membrane effectively and efficiently.

In the above-described first and second embodiments, one sort of the dope is cast. However, in the present invention, two or more sorts of dopes are co-cast to produce a casting membrane. As the co-casting method, there are a simultaneous co-casting method in which two or more sorts of the dopes are simultaneously cast, or a sequentially

casting method in which two or more sorts of the dopes are sequentially cast. When the co-casting is performed, the casting die with a feed block or a multi-manifold type casting die can be used. In a multilayer membrane formed of the co-casting method, it is preferable that one of two surface layers preferably occupies in a range of 0.5% and 30% of the whole membrane thickness. Further, in the simultaneous co-casting method, the concentrations of the dopes are previously adjusted such that the higher viscosity dope covers over the low viscosity dope at the time of casting. Further, in the bead formed between the die slit and the support, the dope on the surface sides has a larger ratio of the poor solvent compared to the inner dope.

Instead of the above method for producing the precursor membrane, it is also possible to produce a different type of the precursor membrane by putting the precursor in the micropores of a so-called porous substrate in which a plurality of micropores are formed. As examples of such methods, there are a method in which the precursor is put in the micropores by applying a sol-gel solution containing the precursor onto the porous substrate, a method in which the precursor is filled in the micropores by immersing the porous substrate in the sol-gel solution and the like. As the porous substrate, porous polypropylene, porous polytetrafluoroethylene, porous cross-linked heat-resistant polyethylene, porous polyimide and the like are preferably used. It is also possible to produce the membrane by processing the precursor into a fiber-form and fill the voids in the fibers with other polymers, and forming the fibers into the membrane. As the polymer for filling the voids, it is possible to use the additives described in this specification. The solid electrolyte membrane can be produced by applying the proton substitution in the acid process to the precursor membrane formed by each method.

The solid electrolyte membrane of the present invention is suitably used for the fuel cell, in particular, for the proton conductive membrane in a direct methanol full cell. In addition, the solid electrolyte membrane is used as a component of the fuel cell interposed between the two electrodes of the fuel cell. Further, the solid electrolyte membrane of the present invention is used for the electrolyte in various batteries such as a redox flow battery and the lithium battery, a display element, an electrochemical sensor, a signal transmission medium, a capacitor, electrodialysis, electrolyte membrane for electrolysis, a gel actuator, salt electrolyte membrane and proton exchange membrane.

(Fuel Cell)

In the following, an example of using the solid electrolyte membrane in a membrane electrode assembly, hereinafter referred to as MEA), and an example of using the MEA in the fuel cell are described. The MEA and the fuel cell described in the following are examples of the present invention, and the present invention is not limited to the following examples. The solid electrolyte membrane used for the MEA and the fuel cell may be each solid electrolyte membrane produced in the first and second embodiments. However, in explanation, the modes of the MEA and the fuel cell are described with an example that uses the solid electrolyte membrane 79 produced in the first embodiment. Fig. 5 is a section view illustrating a configuration of the MEA. An MEA 131 is constituted of the solid electrolyte membrane 79, and an anode 132 and cathode 133 placed opposite to each other. The membrane 79 is interposed between the anode 132 and the cathode 133.

The anode 132 is constituted of a porous conductive sheet 132a and a catalyst layer 132b contacting the membrane 79. The cathode 133 is constituted of a porous conductive sheet 133a and a catalyst layer 133b contacting the membrane 79. As the porous conductive sheets 132a, 133a, carbon paper and the like are used. The catalyst layers 132b, 133b are formed of a dispersion in which carbon particles are dispersed into the proton conductive material. The carbon particles support a catalyst metal thereon such as platinum particles. As the carbon particles, there are ketjen black, acetylene black, carbon nanotubes. As the proton conductive material, for instance, Nafion (registered trademark) and the like are used.

The following methods are preferably applied for producing the MEA 131:

(1) Proton conductive material coating method: a catalyst paste (ink) including a carbon supporting active metal, a proton conductive material and a solvent is directly applied on both surfaces of the membrane 79, and a porous conductive sheets 132a, 133a are thermally adhered under pressure thereto to construct a 5-layered MEA.

(2) Porous conductive sheet coating method: A liquid containing the material for the catalyst layer 132b, 133b, for instance, the catalyst paste is applied onto the porous conductive sheet to form a catalyst layer thereon, and a solid electrolytic membrane is adhered thereto under pressure to construct a 5-layered MEA.

(3) Decal method: The catalyst paste is applied onto PTFE to form catalyst layers 132b, 133b thereon, and the catalyst layers 132b, 133b alone are transferred to a solid electrolytic membrane to construct a 3-layered structure. A porous conductive sheet is adhered thereto under pressure to construct a 5-layered MEA.

(4) Catalyst post-attachment method: Ink prepared by mixing a carbon material not supporting platinum powder and a proton conductive material is applied or cast onto the membrane 79, porous conductive sheet 132a, 133a or PTFE to form a membrane. Thereafter, the membrane 79 is immersed into a liquid containing platinum ion so as to reduce and precipitate the platinum particles in the membrane to form the catalyst layers 132b, 133b. After the catalyst

layers 132b, 133b are formed, the MEA 131 is produced by one of the above methods (1) - (3).

The method for producing the MEA is not limited to the above and other known methods are also used. For instance, the following method is used instead of the above methods (1) - (4). A coating liquid containing materials of the catalyst layers 132b, 133b is previously prepared. The coating liquid is applied onto the support (or the web) and dried. The supports (or the webs) on which the catalyst layers 132b, 133b are formed are thermally adhered to both surfaces of the membrane 79 such that the catalyst layers 132b, 133b contact the membrane 79. After peeling the support (or the web), the membrane 79 interposed by the catalyst layers 132b, 133b is sandwiched between the porous conductive sheets 132a, 133a. Thus, the catalyst layers 132b, 133b are airtightly adhering to the membrane to produce the MEA 131.

Fig. 6 is a section view illustrating a configuration of the fuel cell. The fuel cell 141 is constituted of the MEA 131, a pair of separators 142, 143 for sandwiching the MEA 131, current collectors 142 which are formed of stainless nets attached to the separators 142, 143, and gaskets 147. The anode-side separator 142 has an anode-side opening 151 formed therethrough; and the cathode-side separator 143 has a cathode-side opening 152 formed therethrough. Vapor fuel such as hydrogen or alcohol (e.g., methanol) or liquid fuel such as aqueous alcohol solution is fed to the cell via the anode-side opening 15; and an oxidizing gas such as oxygen gas or air is fed thereto via the cathode-side opening 152.

For the anode 132 and the cathode 133, for example, a catalyst that supports active metal particles of platinum or the like on a carbon material may be used. The particle size of the active metal particles generally used is in a range of 2 nm to 10 nm. Active metal particles having a smaller particle size may have a large surface area per the unit mass thereof, and are therefore advantageous since their activity is higher. If too small, however, the particles are difficult to disperse with no aggregation, and it is said that the lowermost limit of the particle size is 2 nm or so.

In hydrogen-oxygen fuel cells, the active polarization of cathode (air electrode) is higher than that of anode (hydrogen electrode). This is because the cathode reaction (oxygen reduction) is slow as compared with the anode reaction. For enhancing the oxygen electrode activity, usable are various platinum-based binary alloys such as Pt-Cr, Pt-Ni, Pt-Co, Pt-Cu, Pt-Fe. In a direct methanol fuel cell in which aqueous methanol is used for the anode fuel, it is a matter of importance that the catalyst poisoning with CO that is formed during methanol oxidation must be inhibited. For this purpose, usable are platinum-based binary alloys such as Pt-Ru, Pt-Fe, Pt-Ni, Pt-Co, Pt-Mo, and platinum-based ternary alloys such as Pt-Ru-Mo, Pt-Ru-W, Pt-Ru-Co, Pt-Ru-Fe, Pt-Ru-Ni, Pt-Ru-Cu, Pt--Ru--Sn, Pt-Ru-Au. As the carbon material for supporting the active metal, acetylene black, Vulcan XC-72, ketjen black, carbon nanohorn (CNH), and carbon nanotube (CNT) are preferably used.

The catalyst layer 132b, 133b have following functions: (1) transporting fuel to active metal, (2) providing the reaction site for oxidation of fuel (anode) or for reduction thereof (cathode), (3) transmitting the electrons released by the redox reaction to the current collector 146, and (4) transporting the protons generated in the reaction to solid electrolytic membrane. For (1), the catalyst layers 132b, 133b must be porous so that liquid and vapor fuel may penetrate the pores. The active metal catalyst supported by the carbon material works for (2); and the carbon material also works for (3). For attaining the function of (4), a proton conductive material is mixed into the catalyst layers 132b, 133b. The proton conductive material mixed in the catalyst layers 132, 133b is not particularly limited as long as it is a solid that has a proton-donating group. Polymer compounds having acid-residue, for instance, perfluorosulfonic acids such as typically Nafion; phosphoric acid-branched poly(meth)acrylates; sulfonated, heat-resistant aromatic polymers such as sulfonated polyether-ether ketones, sulfonated polybenzimidazoles are preferably used. If the material of the membrane 79, that is, the solid electrolyte is used for the material of the catalyst layers 132b, 133b, the catalyst layers 132b, 133b and the membrane 79 are made of the material of the same type. For that reason, the electrochemical contact between the solid electrolytic membrane and the catalyst layer becomes high, which is more advantageous in view of the proton conduction. The amount of the active metal supporting the active metal is preferably from 0.03 to 10 mg/cm$^2$ in view of cell output and the cost efficiency. The amount of the carbon material that supports the active metal is preferably from 1 to 10 times the mass of the active metal. The amount of the solid electrolyte is preferably from 0.1 to 0.7 times the mass of the active metal-supporting carbon.

The anode 132 and the cathode 133 are called also as electrode substrates, transparent layers and backing materials, and serve to prevent interference in current collection and gas permeation due to water accumulation. The carbon papers and carbon fibers are commonly used for them. It is also possible to perform polytetrafluoroethylene (PTEF) processing to the carbon paper and carbon fibers for repelling the water.

The MEA is preferably incorporated in the cell. Sheet resistivity measured by an AC impedance method when the fuel is loaded is preferably 3$\Omega$cm$^2$ or less, more preferably 1$\Omega$cm$^2$ and most preferably 0.5$\Omega$cm$^2$ or less. The sheet resistivity is obtained by a product of an actually measured value and a sample area.

Fuel for the fuel cell is described. For anode fuel, hydrogen, alcohols (e.g., methanol, isopropanol, ethylene glycol), ethers (e.g., dimethyl ether, dimethoxymethane, trimethoxymethane), formic acid, boron hydride complexes, ascorbic acid and the like are used. For cathode fuel, oxygen (including oxygen in air), hydrogen peroxide and the like

are used. For cathode fuel, oxygen (including oxygen in air), hydrogen peroxide and the like are used.

In direct methanol fuel cells, aqueous methanol having a methanol concentration of from 3 to 64 wt. % is used as the anode fuel. As in the anode reaction formula ($CH_3OH + H_2O \rightarrow CO_2 + 6H^+ + 6e^-$), 1 mol of methanol requires 1 mol of water, and the methanol concentration in this case corresponds to 64 wt.% . A higher methanol concentration in fuel is more effective for reducing the weight and the volume of the cell including the fuel tank of the same energy capacity. However, the higher methanol concentration tend to reduce the cell output due to the so-called crossover phenomenon in which methanol penetrates through the solid electrolyte and reacts with oxygen at the cathode to reduce the voltage. When the methanol concentration is too high, the crossover phenomenon is remarkable which reduces the cell output. To prevent the above problem, the optimum concentration of methanol is determined depending on the methanol permeability through the solid electrolytic membrane used. The cathode reaction formula in direct methanol fuel cells is ($(3/2)\ O_2 + 6H^+ + 6e^- \rightarrow H_2O$), and oxygen (generally, oxygen in air) is used as the fuel in the cells.

To supply the anode fuel and the cathode fuel to the corresponding catalyst layers 132b, 133b, there are two methods: (1) a method of forcedly circulating the fuel by the use of an auxiliary device such as pump, that is, an active method, and (2) a method not using such auxiliary device, that is, a passive method, for example, the liquid fuel is supplied through capillarity or by free-fall, and vapor fuel is supplied by exposing the catalyst layer to air. It is also possible to combine these methods. The method (1) has some advantages in that water formed in the cathode area is circulated, and high-concentration methanol is usable as fuel, and that air supply enables high output from the cells, while it is difficult to downsize the cell because a fuel supply unit is necessary. On the other hand, the method (2) enables to downsize the cells, while the fuel supply rate is readily limited and high output from the cells is often difficult.

The unit cell voltage of fuel cells is generally at most 1 V. It is desirable to stack up the unit cells in series, depending on the necessary voltage for load. As methods for stacking, a plane stacking in which unit cells are arranged on a plane, and a bipolar stacking in which unit cells are stacked up via a separator with a fuel passage formed on both sides thereof are used. In the plane stacking, the cathode (air electrode) is on the surface of the stacked structure so that it is easy to take in air and realizes a thin structure. Accordingly, the plane stacking is suitable for small-sized fuel cells. In addition, it is also possible to apply MEMS technology, in which a silicon wafer is processed to form a micropattern thereon and fuel cells are stacked on the processed silicon wafer.

Fuel cells are used in various appliances, for example, for automobiles, electric and electronic appliances for household use, mobile devices and the like. In particular, direct methanol fuel cells enable downsizing, lightweight and do not require charging. Having such advantages, they are expected to be used for various energy sources for mobile appliances and portable appliances. For example, mobile appliances in which fuel cells are favorably used include mobile phones, mobile notebook-size personal computers, electronic still cameras, PDA, video cameras, mobile game drivers, mobile servers, wearable personal computers, mobile displays and so forth. The portable appliances in which fuel cells are favorably used include portable generators, outdoor lighting devices, pocket lamps, electrically-powered (or assisted) bicycles and so forth. In addition, fuel cells are also favorable for power sources for robots for industrial and household use and for other toys. Moreover, they are further usable as power sources for charging secondary batteries that are mounted on these appliances.

[Example 1]

Next, examples of the present invention are described. In the following examples, the examples 1-3 and 5-8 exemplify the first embodiment of the present invention. Further, the examples 4 is the comparison experiment of the present invention.

A compound whose X in the chemical formula 3 is cation species other than a hydrogen atom H is used as the precursor. This precursor is referred to as a material A. In the material A, composition in the chemical formula 3 is as follows: X is Na, Y is $SO_2$, Z is (I) of the chemical formula 4, n is 0.33, m is 0.67, the number average molecular weight Mn is 61000, and the weight average molecular weight Mw is 159000. The material A and the solvent are mixed by the following composition to dissolve the material A in the solvent. Thus, a dope with the material A of 20 wt.% to the total weight thereof is formed. Hereinafter this dope is referred to as the dope A.

| | |
|---|---|
| Material A | 100 pts.wt |
| Solvent component 1: DMSO | 256 pts.wt |
| Solvent component 2: methanol | 171 pts.wt |

[Production of solid electrolyte membrane]

On the PET film as the casting belt 93 which is running, the dope A is cast to form the casting membrane 61. On the casting membrane 61, dry air of 45°C/10%RH is fed 30 minutes from an air duct of the drying device 98a, to dry

the casting membrane so that the remaining solvent becomes 180wt.% (dry measure) . With use of the slot die, pure water of 50ml/$m^2$ is coated on the casting membrane 61 on the PET film. The casting membrane 61 is transported while the surface on which the pure water is coated is kept 5 minutes in non-contact state. Then the casting membrane 61 is peeled from the PET film as the precursor membrane 67. The process for giving the self-supporting property (from the formation of the casting membrane 61 to the peeling of the casting membrane 61 as the precursor membrane 67) is performed according to optimized conditions obtained by pre-performed experiments. The modulus of elasticity of the precursor membrane 67 is $5.5\times10^6$ Pa. The precursor membrane 67 is immersed in the pure water whose temperature is kept at 30°C, to perform the solvent substitution. After the precursor membrane 67 is removed from the pure water, the moisture on the surface of the precursor membrane 67 is drained (removed) with use of the air shower 106. The guide roller guides (feeds) the precursor membrane 67 to the tenter 83. The clips 83a hold the both side edges of the precursor membrane 67. By movement of the clips 83a, the precursor membrane 67 passes through inside the tenter 83. In the tenter 83, by dry air of 120°C, the precursor membrane 67 is dried for 10 minutes. Accordingly, the precursor membrane 67 with the remaining solvent of 10wt.% (dry measure) is obtained. At the exit of the tenter 83, the clips 83a release the holding of the precursor membrane 67. The edge slitting device 107 cuts (removes) the both side edges of the precursor membrane 67. The guide roller 84b guides the precursor membrane 67 into the sulfuric acid aqueous solution of 0.5mol/liter concentration whose temperature is kept at 80°C, to perform the solvent substitution. By the solvent substitution, the hydrogen-substituted membrane 75 is obtained from the precursor membrane 67. After the hydrogen-substituted membrane 75 is removed from the sulfuric acid aqueous solution, the membrane 75 is washed by water. Then the moisture on the hydrogen-substituted membrane 75 is drained with use of the air shower. After the draining, the hydrogen-substituted membrane 75 is fed into the drying chamber 86. Inside the drying chamber 86, the membrane 75 is dried in a temperature range of 120°C to 185°C while transported by the plural rollers 127. Accordingly, the solid electrolyte membrane 79 with the remaining solvent of less than 5wt.% (dry measure) is obtained.

The properties of the obtained solid electrolyte membranes are evaluated with each of the following items. The membranes are evaluated according to same methods and criteria among the examples 1 to 8. The evaluation results are shown in Table 1. The numerals in Table 1 correspond to the numerals assigned to each of the following items.

1. Production continuity

Evaluation as to whether the solid electrolyte membrane is produced continuously. The evaluation in Table 1 is based on the criteria as follows:

Good: continuously produced
Normal: continuously produced, but sometimes suspended
Poor: cannot be produced

2. Variation in thickness

The thickness of the solid electrolyte membrane is continuously measured at the velocity of 600 mm/min by using the electronic micrometer produced by Anritsu Corporation Ltd. The data obtained by the measurement is recorded on a chart sheet with a 1/20 scale at the velocity of 30 mm/min. The thickness variation value of the solid electrolyte membrane is obtained from a measured result recorded on the chart sheet with use of a ruler, and the obtained value is rounded to one decimal place.

3. Measurement of residual rate of solvent (DMSO)

A sample with a dimension of 7 mm $\times$ 35 mm is cut out from each of the obtained solid electrolyte membranes. An amount of residual DMSO (weight ratio of DMSO) is measured by using a gas chromatography (model: GC-18A manufactured by Shimadzu Corporation). Values in Table 1 are calculated from a formula:

$(y3/x3) \times 100$ where x3 is the weight of the sample and y3 is the weight of DMSO.

4. Adhesion properties of electrodes

MEA is produced according to methods same as (1) and (2) of item 6 described below. The evaluation of adhesion property of each MEA is performed by visual observation of the adhesion condition of the MEA after the heat-press at 210 °C under 3MPa for 10 minutes.

Good: whole surfaces are adhered uniformly

Normal: partially peeled
Poor: dimension of the peeled portion consists of 10% of the whole dimension

5. Proton conductivity

The measurement of the proton conductivity is performed according to Journal of the Electrochemical Society 143(4), p.1254-1259(1996), with use of AC 4 probes method. Concretely, at first a sample of the solid electrolyte membrane having a length of 2cm and a width of 1cm is prepared. The sample is positioned on a PTFE plate on which four platinum needles are arranged (fixed) with 5mm intervals. Then another PTFE plate is positioned on the sample, and these components are fixed by screws as an examination cell. The proton conductivity is measured with use of the examination cell and an impedance analyzer (combination of Solartron 1480 and 1225B), in the alternating current impedance measuring method in heated water of 80°C.

6. Power density of fuel cell

The fuel cell 141 is formed with use of the solid electrolyte membrane and output power of the fuel cell 141 is measured. The formation method of the fuel cell 141 and the measuring method of the power density of the fuel cell 141 are as follows.

(1) Formation of catalyst sheet A used as the catalyst layers 132b and 133b

2g of platinum-supporting carbon (50wt.% of the platinum is supported by Vulcan XC72) is mixed with 15g of 5% alcohol solution as Nafion solution (registered trademark of Du Pont Kabushiki Kaisha), and dispersed for 30 minutes by using an ultrasonic disperser. The average particle diameter of the resulting dispersion is about 500 nm. The obtained dispersion is coated on a polytetrafluoroethylene film with reinforcement (produced by Saint-Gobain K.K.). Then the film is dried and punched out into a circle of 9mm diameter as a catalyst sheet A.

(2) Formation of MEA 131

The catalyst sheet A is attached to both surfaces of the solid electrolyte membrane obtained from each of the examples 1 to 10 such that the coated surfaces of the catalyst sheet A are attached to the solid electrolyte membrane and heat-pressed at 210°C under 3MPa for 10 minutes. Then the heating temperature is reduced while the pressure is still applied. After that, the MEA is formed by peeling off the support of the catalyst sheet A.

(3) Power density of the fuel cell 141

On the MEA obtained in (2), gas diffusion electrodes (produced by E-TEK) cut in the same size as the electrodes of MEA are stacked. Then this assembly is set to a standard fuel cell test cell (produced by ElectroChem, Inc.). The test cell is connected to a fuel cell evaluation system (As-510, produced by NF Corporation). Then the system is driven until voltage is stabilized while humidified hydrogen gas flows in an anode side and humidified simulated atmosphere flows in a cathode side. Then a load is applied between the anode electrode and the cathode electrode, and resulting current-voltage property is recorded. The record is measured as the power density ($W/cm^2$).

[Example 2]

A compound whose X in the chemical formula 3 is cation species other than a hydrogen atom H is used as the precursor. This precursor is referred to as a material B. In the material B, composition in the chemical formula 3 is as follows: X is Na, Y is $SO_2$, Z is (I) of the chemical formula 4, n is 0.33, m is 0.67, the number average molecular weight Mn is 68000, and the weight average molecular weight Mw is 200000. The material B and the solvent are mixed by the following composition to dissolve the solid content of the material B in the solvent. Thus, a dope with the material B of 20 wt.% to the total weight thereof is formed. Hereinafter this dope is referred to as the dope B.

| | |
|---|---|
| Material B | 100 pts.wt |
| Solvent component 1: DMSO | 200 pts.wt |
| Solvent component 2: methanol | 135 pts.wt |

The solid electrolyte membrane 79 is produced with use of the dope B. In the casting membrane drying process,

dry air of 45°C/10%RH is fed onto the casting membrane for 20 minutes. Other processes for producing the solid electrolyte membrane are the same as in the example 1. In the peeling process, the modulus of elasticity of the precursor membrane 67 is $6.6\times10^6$Pa. An evaluation result of the obtained solid electrolyte membrane 79 is shown in Table 1.

[Example 3]

The solid electrolyte membrane 79 is produced with use of the dope B. In the contacting process, DMSO aqueous solution of 20wt.% is used as the contact solvent. Other processes for producing the solid electrolyte membrane are the same as in the example 2. In the peeling process, the modulus of elasticity of the precursor membrane 67 is $2.3\times10^6$Pa. An evaluation result of the obtained solid electrolyte membrane 79 is shown in Table 1.

[Example 4] comparative

The solid electrolyte membrane producing process 60 is performed with use of the dope B, in the process basically same as in the example 2. However, right after the casting membrane drying process (dry air of 45°C/10%RH is fed onto the casting membrane for 20 minutes), the casting membrane is peeled from the PET film as the precursor membrane 67. The precursor membrane 67 cannot be transported by the membrane producing apparatus 33, because the membrane is deformed by its own weight.

[Example 5] comparative

The solid electrolyte membrane producing process 60 is performed with use of the dope B, in the process basically same as in the example 2. However, after the casting membrane drying process (dry air of 45°C/10%RH is fed onto the casting membrane for 20 minutes), the pure water of 50ml/$m^2$ is coated on the casting membrane 61 on the PET film with use of the slot die. The casting membrane 61 is transported while the surface on which the pure water is coated is kept 1 minute in non-contact state. In the peeling process, the modulus of elasticity of the precursor membrane 67 is $8.9\times10^9$Pa. When this precursor is fed into the water of 30°C, the membrane is deformed by contraction of the base. Accordingly, the precursor membrane 67 cannot be transported by the membrane producing apparatus 33. As a reference experiment, a batch casting in which a sheet-like casting membrane is formed is performed instead of the continuous casting. The conditions are mostly same as in the continuous casting. In this reference experiment, a sheet-like solid electrolyte membrane can be obtained.

[Example 6]

The solid electrolyte membrane producing process 60 is performed with use of the dope B, in the process basically same as in the example 2. However, the precursor membrane 67 peeled from the PET film is transported into the tenter, without immersed into the pure water. In the peeling process, the modulus of elasticity of the precursor membrane 67 is $6.6\times10^6$Pa. An evaluation result of the obtained solid electrolyte membrane 79 is shown in Table 1.

[Example 7]

The solid electrolyte membrane producing process 60 is performed with use of the dope B, in the process same as in the example 2. However, in the dope B, DMSO is used instead of the methanol. In the peeling process, the modulus of elasticity of the precursor membrane 67 is $1.8\times10^3$Pa. An evaluation result of the obtained solid electrolyte membrane is shown in Table 1.

[Example 8]

The solid electrolyte membrane producing process 60 is performed with use of the dope B, in the process basically same as in the example 2. However, in the solvent substitution process, the precursor membrane peeled from the PET film is immersed in the pure water of 30°C for 20 minutes, to perform the solvent substitution. In the peeling process, the modulus of elasticity of the precursor membrane 67 is $6.6\times10^6$Pa. An evaluation result of the obtained solid electrolyte membrane is shown in Table 1.

[Table 1]

| | Evaluation Item | | | | | |
|---|---|---|---|---|---|---|
| | 1 | 2 (μm) | 3 (wt.%) | 4 | 5 (S/cm) | 6 (W/cm$^2$) |
| Example 1 | G | ± 1.5 | 0.4 | G | 0.18-0.19 | 0.49-0.50 |
| Example 2 | G | ±1.5 | 0.2 | G | 0.18-0.19 | 0.51-0.52 |
| Example 3 | G | ±1.5 | 0.5 | G | 0.19-0.20 | 0.52-0.53 |
| Example 4 comparative | P | - | - | - | - | - |
| Example 5 comparative | P | - | - | - | - | - |
| Example 6 | N | ±3.5 | 10.5 | P | 0.08-0.09 | 0.15-0.16 |
| Example 7 | N | ±3.4 | 6.7 | P | 0.10-0.11 | 0.18-0.19 |
| Example 8 | G | ±2.4 | 0.2 | P | 0.18-0.19 | 0.47-0.49 |
| G: Good<br>N: Normal<br>P: Poor | | | | | | |

As the result, in the examples 1 to 3, the solid electrolyte membranes with few thickness variations are produced. The solid electrolyte membrane of each of the examples 1 to 3 has superior proton conductivity. In addition, the fuel cell produced with use of the solid electrolyte membrane of each of the examples 1 to 3 has a power density of at least 0.49, which is superior value for the fuel cell. However, in the examples 4 and 5, since the solvent contacting process is not performed sufficiently, the precursor membrane obtained by the peeling process does not have the sufficient self-supporting property. However, in the example 5, the small sheet-like solid electrolyte membrane is obtained by the batch casting. Accordingly, the condition is enough to form the sheet-like solid electrolyte membrane. In the examples 6 and 7, although the solid electrolyte membranes can be produced, the produced solid electrolyte membranes have thickness variations, proton conductivities and power densities which are inferior than the examples 1 to 3. The reason for that is insufficient contact between the solid electrolyte membrane and the electrodes in producing the MEA. And the reduction of adhesiveness of the solid electrolyte membrane is suspected to be caused by peeling of the casting membrane having insufficient modulus of elasticity, which makes the surface of the solid electrolyte membrane uneven. Therefore, it is found that to produce the solid electrolyte membrane with superior qualities and performances, the dope 24 needs to include the good solvent and the poor solvent of the polymer, and the contacting process and the solvent substitution process need to be performed. From the result of the example 8, it is found that when the solvent substitution process is performed for long time, the water contained in the membrane expands and the thickness variation of the dried membrane becomes large. In addition, it is found that according to the method of the present invention for producing the solid electrolyte membrane, the required time for producing the membrane is no more than 2 hours.

[Example 9]

Examples 9 to 13, 15 and 16 are examples of the second embodiment of the present invention, and examples 14 is a comparative experiment.

[Production of solid electrolyte membrane]

The dope A same as the example 1 is cast on the running PET film from the casting die 92 to form the casting membrane 61. Each of the drying devices 98a to 98d feeds dry air of 45°C/10%RH from the air duct. The dry air continually contacts the casting membrane 61 for 30 minutes. This time is determined such that the casting membrane 61 at the time of starting the contact to the contact liquid 216 includes the material A of 100pts.wt, the DMSO of 240pts.wt and the methanol of 20pts.wt. The casting membrane 61 on the PET film as the casting belt 93 is immersed in water of 30°C, and the casting membrane 61 is peeled from the PET film as the precursor membrane 267 in the water. The time from the start of the immersion to the peeling is 5 minutes. The precursor membrane 267 is transported inside the water, and then taken out from the water to be drained by the air shower 106. The precursor membrane 267 is fed into the tenter 83. In the tenter 83, the clips 83a hold the both edges of the membrane 267 to transport the membrane inside the tenter 83. In the tenter 83, the precursor membrane 267 is dried for 10 minutes by dry air of 120°C. Accordingly, the precursor membrane 267 with the remaining solvent of less than 10wt.% (dry measure) is obtained. At the exit of the tenter 83,

the clips 83a release the holding of the precursor membrane 267. The edge slitting device 107 cuts (removes) the both side edges of the precursor membrane 267. The coating die 211 coats the acid solution 204 on one surface of the precursor membrane 267, and the membrane is washed by water. The hydrogen-substituted membrane 275 imperfectly dried is fed into the drying chamber 86, to be dried in a temperature range of 120°C to 185°C while transported by the plurality of rollers 127. Accordingly, the solid electrolyte membrane 79 with the remaining solvent of less than 3wt.% (dry measure) is obtained. The weight of remaining solvent includes the weight of the water used for the washing. The properties of the obtained solid electrolyte membrane are evaluated with each of the following items.

[Example 10]

The material A in the example 9 is substituted by the material B in the example 2 for producing the dope B. The air duct of each of the drying devices 98a to 98d feeds dry air which continually contacts the casting membrane 61 for 20 minutes. This time is determined such that the casting membrane 61 at the time of starting the contact to the contact liquid 216 includes the material B of 100pts.wt, the DMSO of 185pts.wt and the methanol of 10pts.wt. Other conditions are the same as in the example 9.

[Example 11]

The air duct of each of the drying devices 98a to 98d feeds dry air which continually contacts the casting membrane 61 for 5 minutes. This time is determined such that the casting membrane 61 at the time of starting the contact to the contact liquid 216 includes the material B of 100pts.wt, the DMSO of 195pts.wt and the methanol of 100pts.wt. Other conditions are the same as in the example 10.

[Example 12]

The air duct of each of the drying devices 98a to 98d feeds dry air of 110°C. Other conditions are the same as in the example 10.

[Example 13]

The air duct of each of the drying devices 98a to 98d feeds dry air of 75%RH. Other conditions are the same as in the example 10.

[Example 14] comparative

The peeling process is performed before the contact to the contact liquid 216. Other conditions are the same as in the example 10. The precursor membrane does not have sufficient self-supporting property and is deformed by its own weight. Accordingly, the solid electrolyte membrane with uniform quality cannot be produced continually.

[Example 15]

The air duct of each of the drying devices 98a to 98d feeds dry air which continually contacts the casting membrane 61 for 60 minutes. This time is determined such that the casting membrane 61 at the time of starting the contact to the contact liquid includes the material B of 100pts.wt, the DMSO of 150pts.wt and no methanol. Other conditions are the same as in the example 10.

[Example 16]

A dope C is used instead of the dope B. Other conditions are the same as in the example 10. The composition of the dope C is as follows:

| | |
|---|---|
| Material B | 100 pts.wt |
| Solvent component 1: DMSO | 335 pts.wt |

The properties of the solid electrolyte membranes obtained in the examples 9 to 16 are evaluated with each of the following items. The membranes are evaluated according to same methods and criteria among the examples 9 to 16. The evaluation results are shown in Table 2. The numerals in Table 2 correspond to the numerals assigned to

each of the following items. The explanations of the same evaluation items as the examples 1 to 9 are omitted below.

1. Production continuity
2. Average and variation in thickness

The membrane thickness is continuously measured at the velocity of 600 mm/min by using the electronic micrometer produced by Anritsu Corporation Ltd. The data obtained by the measurement is recorded on a chart sheet with a 1/20 scale at the velocity of 30 mm/min. The data curves are measured by using a ruler. According to the measured value, average thickness and variations in thickness with respect to the average thickness are obtained. In table 2, (a) is average thickness (unit: **μm)**, (b) is the variation in thickness (unit: **μm)** with respect to (a).

3. Weight of residual DMSO in Solid Electrolyte Membrane
4. Adhesion properties of electrodes
5. Proton conductivity
6. Power density of fuel cell

[Table 2]

| | Evaluation Item | | | | | | |
|---|---|---|---|---|---|---|---|
| | 1 | 2 (μm) | | 3 (wt.%) | 4 | 5 (S/cm) | 6 (W/cm$^2$) |
| | | (a) | (b) | | | | |
| Example 9 | G | 63 | ±1.5 | 0.4 | G | 0.18-0.19 | 0.49-0.50 |
| Example 10 | G | 64 | ±1.5 | 0.2 | G | 0.18-0.19 | 0.51-0.52 |
| Example 11 | N | 66 | ±4.8 | 1.3 | P | 0.08-0.09 | 0.15-0.17 |
| Example 12 | G | 64 | ±3.5 | 0.3 | P | 0.11-0.12 | 0.18-0.19 |
| Example 13 | N | 77 | ± 4.5 | 0.6 | P | 0.10-0.12 | 0.20-0.21 |
| Example 14 comparative | P | - | - | - | - | - | - |
| Example 15 | N | 62 | ±4.0 | 3.2 | P | 0.11-0.12 | 0.22-0.23 |
| Example 16 | N | 78 | ±4.2 | 6.3 | P | 0.10-0.11 | 0.22-0.23 |
| G: Good<br>N: Normal<br>P: Poor | | | | | | | |

Production experiments of the solid electrolyte membranes are performed in examples 17 to 23. The examples 17 to 22 are performed with use of the producing apparatus 33 of the first embodiment. The example 23 is a comparative experiment, in which some parts of the producing apparatus 33 are not used. The properties of the solid electrolyte membranes obtained in the examples 17 to 23 are evaluated with each of the items same as in the examples 9 to 16. The evaluation items in Table 3 are same as in Table 2.

[Example 17]

The dope A same as in the example 1 is cast on the casting belt 93 to form the casting membrane 61. By the drying devices 98a to 98d, dry air of 45°C/10%RH is fed onto the casting membrane 61 for 30 minutes, to dry the membrane 61. The casting belt 93 is the PET film. Next, the coating device 100 sprays the pure water of 30°C onto the surface of the casting membrane 61 for 2 minutes, and the casting membrane 61 is peeled from the casting belt 93 as the precursor membrane 67. The amount of DMSO in the casting membrane 61 right before being peeled from the casting belt 93 is 65wt.%.

The precursor membrane 67 is fed into the tank 105 where the pure water of 30 °C is contained as the substitution solvent 202, to be immersed for 3 minutes. The precursor membrane 67 discharged from the tank 105 is drained by the air shower 99 and is fed into the tenter 83. In the tenter 83, the clips 83a hold the both edges of the membrane 267 to transport the membrane inside the tenter 83. In the tenter 83, the precursor membrane 67 is dried for 10 minutes by dry air of 120°C from the drying device (not shown) provided inside the tenter 83. Accordingly, the precursor membrane 67

with the remaining solvent of less than 10wt.% is obtained.

The precursor membrane 67 released from holding of the clips 83a is transported out from the tenter 83, and the both side edges of the membrane are cut. Then the precursor membrane 67 is fed into the liquid bath 84 containing the sulfuric acid aqueous solution of 0.5mol/liter concentration whose temperature is kept at 30°C, and then fed into the water bath 85 containing the pure water of 30°C. The obtained hydrogen-substituted membrane 75 is fed into the drying chamber 74 whose inside temperature is controlled in a range of 120°C to 185°C. Inside the drying chamber 74, the hydrogen-substituted membrane 75 is dried for 30 minutes while transported with support of the plurality of rollers 127, to obtain the solid electrolyte membrane 79.

When an amount of the residual DMSO in the solid electrolyte membrane 79 is measured, the measured value is 0.4wt.%. The measurement is performed by following processes: a sample with a dimension of 7 mm × 35 mm is cut out from the obtained solid electrolyte membrane; and the amount of residual DMSO (weight ratio of DMSO) is measured by using the gas chromatography (model: GC-18A manufactured by Shimadzu Corporation). The value is calculated by the same method (formula) as in the examples 9 to 16. The amount of the residual DMSO in the solid electrolyte membrane 79 produced by each of the examples 18 to 13 is also measured by the same processes.

[Example 18]

The solid electrolyte membrane 79 is produced with use of the dope B. In the casting membrane drying process, dry air of 45°C/10%RH is fed onto the casting membrane for 20 minutes. Other processes for producing the solid electrolyte membrane are the same as in the example 17.

[Example 19] comparative

On the casting membrane 61, the coating device 100 sprays pure water of 30°C for 1 minute. Then the casting membrane 61 is peeled from the casting belt 93 as the precursor membrane 67. Other conditions are the same as in the example 18. However, the precursor membrane 67 shrinks (is deformed) in the tank 105, and cannot be transported for the following processes. Accordingly, the solid electrolyte membrane 79 can be produced. Note that when the amount of the residual DMSO in the casting membrane 61 after the contact to the pure water is measured, the measured value is 130wt.%. As a reference experiment, the batch casting is performed to produce a sheet-like solid electrolyte membrane. In this experiment, although a precursor membrane is slightly contracted, the sheet-like solid electrolyte membrane having a sufficient appearance is obtained.

[Example 20]

The solid electrolyte membrane 79 is produced without feeding the precursor membrane 67 into the tank 105. Other processes for producing the solid electrolyte membrane are the same as in the example 18.

[Example 21]

The solid electrolyte membrane 79 is produced with use of the dope B, by the processes same as in the example 18. However, in the dope B, DMSO is used instead of the methanol.

[Example 22] comparative

The precursor membrane 67 is immersed into the tank 105 for 20 minutes. Other processes for producing the solid electrolyte membrane are the same as in the example 18. When the amount of the residual DMSO in the solid electrolyte membrane 79 is measured, the measured value is 0.1wt.%.

[Example 23] comparative

The casting membrane 61 is peeled from the casting belt 93 as the precursor membrane 67, without use of the coating device 100 (without the contact between the casting membrane and the pure water). Other processes for producing the solid electrolyte membrane are the same as in the example 18. However, the precursor membrane is deformed immediately by its own weight and cannot be transported. Accordingly, the solid electrolyte membrane cannot be continually produced. As a reference experiment, the batch casting is performed to produce a sheet-like solid electrolyte membrane. However, the membrane is deformed and does not have a good appearance.

[Table 3]

| | Evaluation Item | | | | | | |
|---|---|---|---|---|---|---|---|
| | 1 | 2 (μm) | | 3 (wt.%) | 4 | 5 (S/cm) | 6 (W/cm$^2$) |
| | | (a) | (b) | | | | |
| Example 17 | G | 63 | ±1.5 | 0.4 | G | 0.18-0.19 | 0.49-0.50 |
| Example 18 | G | 64 | ±1.5 | 0.2 | G | 0.18-0.19 | 0.51-0.52 |
| Example 19 comparative | P | - | - | - | - | - | - |
| Example 20 | N | 70 | ±3.6 | 8.5 | P | 0.10-0.11 | 0.18-0.19 |
| Example 21 | N | 71 | ± 3.4 | 5.7 | P | 0.10-0.12 | 0.20-0.22 |
| Example 22 comparative | N | - | - | - | P | - | - |
| Example 23 comparative | P | - | - | - | - | - | - |
| G: Good<br>N: Normal<br>P: Poor | | | | | | | |

From the results of the examples 17 to 23, it is found that the examples 17 and 18 take only approximately 65 minutes to 75 minutes for the drying through the all processes, while the conventional techniques take 5 hours to 14 hours or more for the drying. Accordingly, the present invention can drastically reduce the drying time. The reason is that the casting membrane becomes gel-like form and the amount of the poor solvent is increased in the casting membrane, since the compound which is the poor solvent of the solid electrolyte contacts the casting membrane. From the results of the example 19 and the reference experiment, it is found that the manufacturing conditions of the long solid electrolyte membrane and the sheet-like solid electrolyte membrane can be separated by degree of the self-supporting property of the casting film. In addition, from the results of the examples 17 to 23, it is found that the present invention can perform the mass production of the solid electrolyte membrane with high productivity, and the solid electrolyte membrane has the high proton conductivity without being affected by the conditions such as temperature and humidity. Also, the fuel cell including this solid electrolyte membrane can perform the high power density.

The drying process in the tenter and the former processes are performed by the method of second embodiment (see FIG. 4), and the later processes are performed by the method of the first embodiment.

[Example 24]

As same as in the example 9, the dope A is cast to form the casting membrane 61, and the casting membrane 61 is dried by the dry air for 30 minutes. The casting membrane 61 still on the casting belt 93 is fed into the liquid bath 215 and immersed in the water of 30°C, and then the casting membrane 61 is peeled as the precursor membrane 267, from the casting belt 93 by the peeling roller 210. While these processes, the total time for immersion of the casting membrane 61 and the precursor membrane 267 is 5 minutes.

The moisture on the surface of the gel-like precursor membrane 267 is drained by the air shower. Then the precursor membrane 267 is dried in the tenter 83 and the both side edges of the membrane 267 are cut by the edge slitting device 107, as same as in the example 9.

Then the precursor membrane 267 is fed into the liquid bath 84 (see FIG. 3) containing the sulfuric acid aqueous solution of 0.5mol/liter concentration whose temperature is kept at 70°C, to perform the proton substitution. According to this process, Na contained in the precursor membrane 267 is substituted by H (hydrogen atom), to produce the hydrogen-substituted membrane.

At the downstream side from the water bath 85, other water bathes are provided to perform plural times of washing of the hydrogen-substituted membrane. Temperature of water in each water bath is kept at 70°C. After the washing, the water on the hydrogen-substituted membrane is removed by the air shower, and the membrane is dried in the drying chamber 86. Inside temperature of the drying chamber 86 is in a range of 60°C to 120°C. The moisture of the obtained solid electrolyte membrane is controlled at the moisture controlling chamber 87, and the solid electrolyte membrane is rolled into a roll shape in the winding chamber 88.

The properties of the obtained solid electrolyte membranes are evaluated with each of the following items 1 to 4. The membranes are evaluated according to same methods and criteria among the examples 25 to 28. The evaluation

results are shown in Table 4. The numerals in Table 4 correspond to the numerals assigned to each of the following items. Note that the explanations of the items same as in the example 1 are omitted below.

1. Production continuity
2. Proton substitution rate

A sample piece of the solid electrolyte membrane is made. A weight of the sample is measured and then the sample is subject to an alkali treatment. The alkali treatment is performed by immersion of the sample for 2 hours into NaOH aqueous solution of 0.1mol/liter. While the immersion, the NaOH aqueous solution is agitated. Next, the sample is removed from the NaOH aqueous solution, and an ion-exchange capacity (IEC) of the solid electrolyte membrane is obtained since the NaOH aqueous solution is subject to a back-titration technique with use of hydrochloric acid aqueous solution. Then the ion-exchange capacity and the theoretical figure are compared to calculate an amount of the substitution (Na is substituted by H) as the proton substitution rate. Note that the theoretical figure is an induction amount of sulfonic acid group, which is calculated by a structural analysis such as NMR measurement.

3. Proton conductivity
4. Power density of fuel cell

[Example 25]

The dope B is cast instead of the dope A used in the example 24. Dry air of 45°C/10%RH is fed for 20 minutes onto the casting membrane 61 on the casting belt 93. Other processes for producing the solid electrolyte membrane are the same as in the example 24.

[Example 26]

The sulfuric acid aqueous solution in the liquid bath 84 is kept at 80°C. Other processes for producing the solid electrolyte membrane are the same as in the example 25.

[Example 27] comparative

The sulfuric acid aqueous solution in the liquid bath 84 is kept at 20°C. Other processes for producing the solid electrolyte membrane are the same as in the example 25.

[Example 28] comparative

The acid solution in the liquid bath 84 is hydrochloric acid aqueous solution of 1mol/liter. Other processes for producing the solid electrolyte membrane are the same as in the example 25.

[Table 4]

| | Evaluation Item | | | |
|---|---|---|---|---|
| | 1 | 2 (mol%) | 3 (S/cm) | 4 (W/cm$^2$) |
| Example 24 | G | 94 | 0.18-0.19 | 0.50-0.51 |
| Example 25 | G | 95 | 0.18-0.19 | 0.51-0.52 |
| Example 26 | G | 97 | 0.19-0.20 | 0.51-0.52 |
| Example 27 comparative | G | 72 | 0.10-0.12 | 0.20-0.21 |
| Example 28 comparative | G | 75 | 0.12-0.13 | 0.23-0.25 |
| G: Good<br>N: Normal<br>P: Poor | | | | |

From the examples 24 to 26, it is found that the solid electrolyte membrane of the present invention is very superior in the proton conductivity, the proton substitution rate and the power density. From the examples 27 and 28, it is found that the proton conductivity and the proton substitution rate are affected by the temperature and the formula

weight of the acid solution used in the acid process.

As described above, according to the present invention, a lot of the membrane with high proton conductivity can be continually produced while the acid process is performed in the on-line. In addition, when the solid electrolyte membrane produced by the producing method the present invention is used for the solid electrolyte layer of the fuel cell, the fuel cell can have the superior power density.

Industrial applicability

The present invention is applicable to the mass production of the solid electrolyte membranes. The obtained solid electrolyte membrane is suitably used for the solid electrolyte layer of the fuel cell.

## Claims

**1.** A method for producing a solid electrolyte membrane comprising the steps of:

a first process for casting a dope on a support from a casting die to form a casting membrane, said dope containing a solid electrolyte dissolved in an organic solvent;
a second process for performing a contact between said casting membrane and a contact poor solvent which is a poor solvent of said solid electrolyte, to give a self-supporting property to said casting membrane; wherein the contact poor solvent is either water or an aqueous solution containing a compound which is a good solvent of the solid electrolyte; the good solvent is selected from DMF, DMAc, DMSO and NMP and the poor solvent is selected from lower alcohols having 1 to 5 carbons, methyl acetate and acetone;
a third process for peeling said casting membrane having said self-supporting property from said support as a wet membrane; and
a fourth process for drying said wet membrane so that said wet membrane becomes said solid electrolyte membrane,
**characterized in that** the method further comprises the steps of:

an acid contacting process for contacting an acid solution which is a proton donor to said wet membrane while transportation of said wet membrane before said fourth process, said acid being a compound whose anion has a formula weight of 40 to 1000 at the time of ionization, the temperature of said acid solution being at least 30°C and no more than the boiling point thereof;
and
a washing process for washing said wet membrane with use of cleaning liquid after said acid contacting process but before said fourth process, and
wherein said solid electrolyte is an aromatic polymer that is a copolymer formed of structural units represented by general formulae (I), (II) and (III) shown in chemical formula 1

[Chemical formula 1]

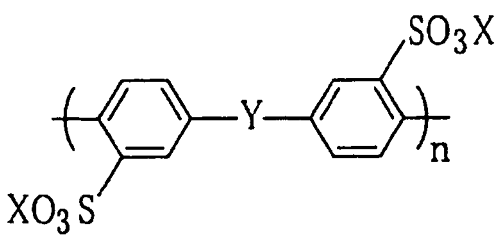

··· ( I )

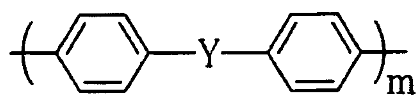

··· ( II )

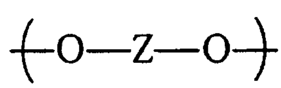

··· ( III )

(X is a cationic species except a hydrogen atom, Y is $SO_2$, Z has a structure represented in (I) or (II) in a chemical formula 2, n and m satisfy $0.1 \leq n/(m+n) \leq 0.5$)

[Chemical formula 2]

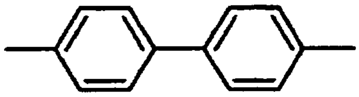

... ( I )

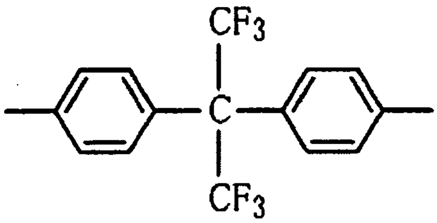

... ( II )

2. A method according to claim 1, wherein said organic solvent is a mixture of a first compound which is a good solvent of said solid electrolyte and a second compound which is a poor solvent of said solid electrolyte.

3. A method according to claim 1, wherein time for contacting said casting membrane with said contact poor solvent is determined in accordance with at least one of hardness of said casting membrane and weight of said first compound in said casting membrane both of which changes during said contacting.

4. A method according to claim 1, wherein a modulus of elasticity of said wet membrane in said third process is at least $6 \times 10^5$ Pa.

5. A method according to claim 1, further comprising the step of a fifth process for performing a contact between said wet membrane and a liquid which is compatible with said organic solvent.

6. A method according to claim 5, wherein said liquid is either water or aqueous solution containing said organic solvent.

7. A method according to claim 5, wherein time for contacting said wet membrane with said liquid is 10 minutes or less.

8. A method according to claim 1, further comprising the step of a sixth process for drying said casting membrane before said second process.

9. A method according to claim 2, wherein said first compound is dimethylsulfoxide, and said second compound is alcohol having one to five carbons.

## Patentansprüche

1. Verfahren zur Herstellung einer Festelektrolytmembran, umfassend die Schritte:

ein erstes Verfahren zum Gießen eines Stoffes (dope) aus einer Gussform auf einen Träger um eine Gussmembran zu bilden, wobei der Stoff ein in einem organischen Lösungsmittel aufgelösten Festelektrolyt enthält;
ein zweites Verfahren zur Durchführung eines Kontaktes zwischen der Gussmembran und einem kontaktarmen Lösungsmittel, welches ein schlechtes Lösungsmittel für den Festelektrolyt ist, um der Gussmembran eine selbsttragende Eigenschaft zu verleihen;
wobei das kontaktarme Lösungsmittel entweder Wasser oder ein wässrige Lösung ist, enthaltend eine Verbindung, welche ein gutes Lösungsmittel für den Festelektrolyt ist; wobei das gute Lösungsmittel gewählt ist aus DMF, DMAc, DMSO und NMP und das schlechte Lösungsmittel gewählt ist aus niedrigeren Alkoholen mit 1 bis 5 Kohlenstoffen, Methylacetat und Aceton;
ein drittes Verfahren zum Abziehen der Gussmembran mit der selbsttragenden Eigenschaft von dem Träger

als eine nasse Membran; und

ein viertes Verfahren zum Trocknen der nassen Membran, so dass die nasse Membran zu der Festelektrolytmembran wird,

**dadurch gekennzeichnet, dass** das Verfahren des Weiteren die Schritte umfasst:

ein Säurekontaktverfahren zum in Kontakt bringen einer Säurelösung, welche ein Protonendonator ist, mit der nassen Membran in Kontakt zu bringen, während der Beförderung der nassen Membran vor dem vierten Verfahren, wobei die Säure eine Verbindung ist, deren Anion ein Zusammensetzungsgewicht von 40 bis 1.000 zum Zeitpunkt der Ionisierung aufweist, wobei die Temperatur der Säurelösung wenigstens 30 °C beträgt und nicht mehr als der Siedepunkt dieser;

ein Waschverfahren zum Waschen der nassen Membran unter Verwendung einer Reinigungsflüssigkeit nach dem Säurekontaktverfahren jedoch vor dem vierten Verfahren, und wobei der Festelektrolyt ein aromatisches Polymer ist, welches ein Kopolymer ist, gebildet durch die Struktureinheiten dargestellt durch die allgemeinen Formeln (I), (II) und (III), welche in der chemischen Formel 1 dargestellt sind

(Chemische Formel 1)

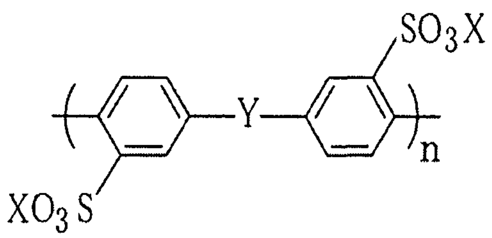

··· ( I )

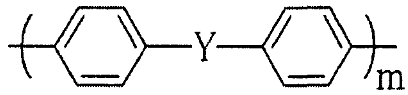

··· ( II )

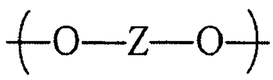

··· ( III )

(X ist eine kationische Art mit Ausnahme eines Wasserstoffatoms, Y ist $SO_2$, Z weist eine Struktur auf, dargestellt in (I) oder (II) in einer chemischen Formel 2, n und m erfüllen $0{,}1 \leq n/(m+n) \leq 0{,}5$)

(Chemische Formel 2)

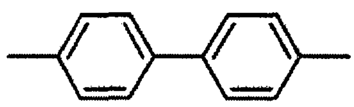

··· ( I )

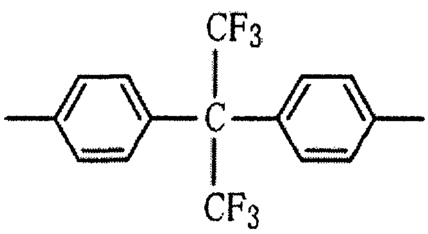

··· ( II )

**2.** Verfahren nach Anspruch 1, wobei das organische Lösungsmittel eine Mischung einer ersten Verbindung, welche

ein gutes Lösungsmittel des Festelektrolyts ist, und einer zweiten Verbindung ist, welche ein schlechtes Lösungsmittel des zweiten Festelektrolyts ist.

3. Verfahren nach Anspruch 1, wobei die Kontaktdauer der Gussmembran mit dem kontaktarmen Lösungsmittel, gemäß wenigstens einem von der Härte der Gussmembran und dem Gewicht der ersten Verbindung in der Gussmembran bestimmt wird, welche sich beide während des Kontakts verändern.

4. Verfahren nach Anspruch 1, wobei ein Elastizitätsmodul der nassen Membran in dem dritten Verfahren wenigstens $6 \times 10^5$ Pa beträgt.

5. Verfahren nach Anspruch 1, des Weiteren umfassend den Schritt eines fünften Verfahrens zur Durchführung eines Kontakts zwischen der nassen Membran und einer Flüssigkeit, welche mit dem organischen Lösungsmittel kompatibel ist.

6. Verfahren nach Anspruch 5, wobei die Flüssigkeit entweder Wasser oder eine wässrige Lösung, welche das organische Lösungsmittel enthält, ist.

7. Verfahren nach Anspruch 5, wobei die Kontaktdauer der nassen Membran mit der Flüssigkeit 10 Minuten oder weniger beträgt.

8. Verfahren nach Anspruch 1, des Weiteren umfassend den Schritt eines sechsten Verfahrens zum Trocknen der Gussmembran vor dem zweiten Verfahren.

9. Verfahren nach Anspruch 2, wobei die erste Verbindung Dimethylsulfoxid ist und die zweite Verbindung Alkohol mit 1 bis 5 Kohlenstoffen ist.

## Revendications

1. Procédé de production d’une membrane d’électrolyte solide comprenant les étapes de :

un premier traitement consistant à couler un dopant sur un support à partir d’une matrice de coulée pour former une membrane de coulée, ledit dopant contenant un électrolyte solide dissous dans un solvant organique ;
un deuxième traitement consistant à mettre en contact ladite membrane de coulée avec un mauvais solvant de contact qui est un mauvais solvant dudit électrolyte solide, pour conférer une propriété d’auto-portance à ladite membrane de coulée ; le mauvais solvant de contact étant soit l’eau soit une solution aqueuse contenant un composé qui est un bon solvant de l’électrolyte solide ; le bon solvant étant choisi parmi le DMF, le DMAc, le DMSO et la NMP et le mauvais solvant étant choisi parmi les alcools inférieurs ayant 1 à 5 carbones, l’acétate de méthyle et l’acétone ;
un troisième traitement consistant à décoller ladite membrane de coulée présentant ladite propriété d’auto-portance dudit support, sous la forme d’une membrane humide ; et
un quatrième traitement consistant à sécher ladite membrane humide de sorte que ladite membrane humide devienne ladite membrane d’électrolyte solide,
**caractérisé en ce que** le procédé comprend en outre les étapes de :

un traitement de contact avec un acide consistant en une mise en contact avec une solution d’acide qui est un donneur de protons à ladite membrane humide pendant le transport de ladite membrane humide avant ledit quatrième traitement, ledit acide étant un composé dont l’anion a une masse molaire de 40 à 1000 au moment de l’ionisation, la température de ladite solution d’acide étant d’au moins 30 °C et non supérieure au point d’ébullition de celle-ci ; et
un traitement de lavage consistant à laver ladite membrane humide à l’aide d’un liquide de nettoyage après ledit traitement de contact avec un acide mais avant ledit quatrième traitement, et
dans lequel ledit électrolyte solide est un polymère aromatique qui est un copolymère formé de motifs structuraux représentés par les formules générales (I), (II) et (III) présentées dans la formule chimique 1

[Formule chimique 1]

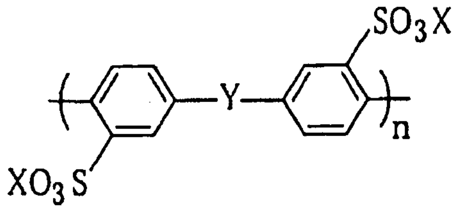
··· ( I )

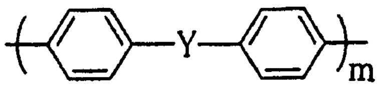
··· ( II )

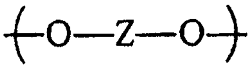
··· ( III )

(X est une espèce cationique à l'exception d'un atome d'hydrogène, Y est $SO_2$, Z a une structure représentée en (I) ou (II) dans la formule chimique 2, n et m satisfont $0,1 \leq n/(m+n) \leq 0,5$)

[Formule chimique 2]

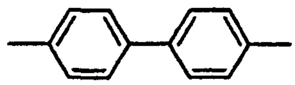
··· ( I )

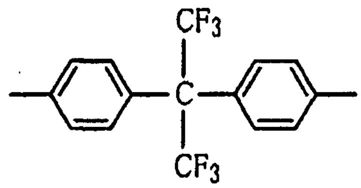
··· ( II )

2. Procédé selon la revendication 1, dans lequel ledit solvant organique est un mélange d'un premier composé qui est un bon solvant dudit électrolyte solide et d'un second composé qui est un mauvais solvant dudit électrolyte solide.

3. Procédé selon la revendication 1, dans lequel le temps de mise en contact de ladite membrane de coulée avec ledit mauvais solvant de contact est déterminé en fonction d'au moins un paramètre parmi la dureté de ladite membrane de coulée et la masse dudit premier composé dans ladite membrane de coulée, ces deux paramètres variant au cours de ladite mise en contact.

4. Procédé selon la revendication 1, dans lequel le module d'élasticité de ladite membrane de coulée dans ledit troisième traitement est d'au moins $6 \times 10^5$ Pa.

5. Procédé selon la revendication 1, comprenant en outre l'étape d'un cinquième traitement consistant à mettre en contact ladite membrane humide avec un liquide qui est compatible avec ledit solvant organique.

6. Procédé selon la revendication 5, dans lequel ledit liquide est soit l'eau soit une solution aqueuse contenant ledit solvant organique.

7. Procédé selon la revendication 5, dans lequel le temps de mise en contact de ladite membrane humide avec ledit liquide est de 10 minutes ou moins.

8. Procédé selon la revendication 1, comprenant en outre l'étape d'un sixième traitement consistant à sécher ladite

membrane de coulée avant ledit deuxième traitement.

**9.** Procédé selon la revendication 2, dans lequel ledit premier composé est le diméthylsulfoxyde, et ledit second composé est un alcool ayant un à cinq carbones.

FIG.1

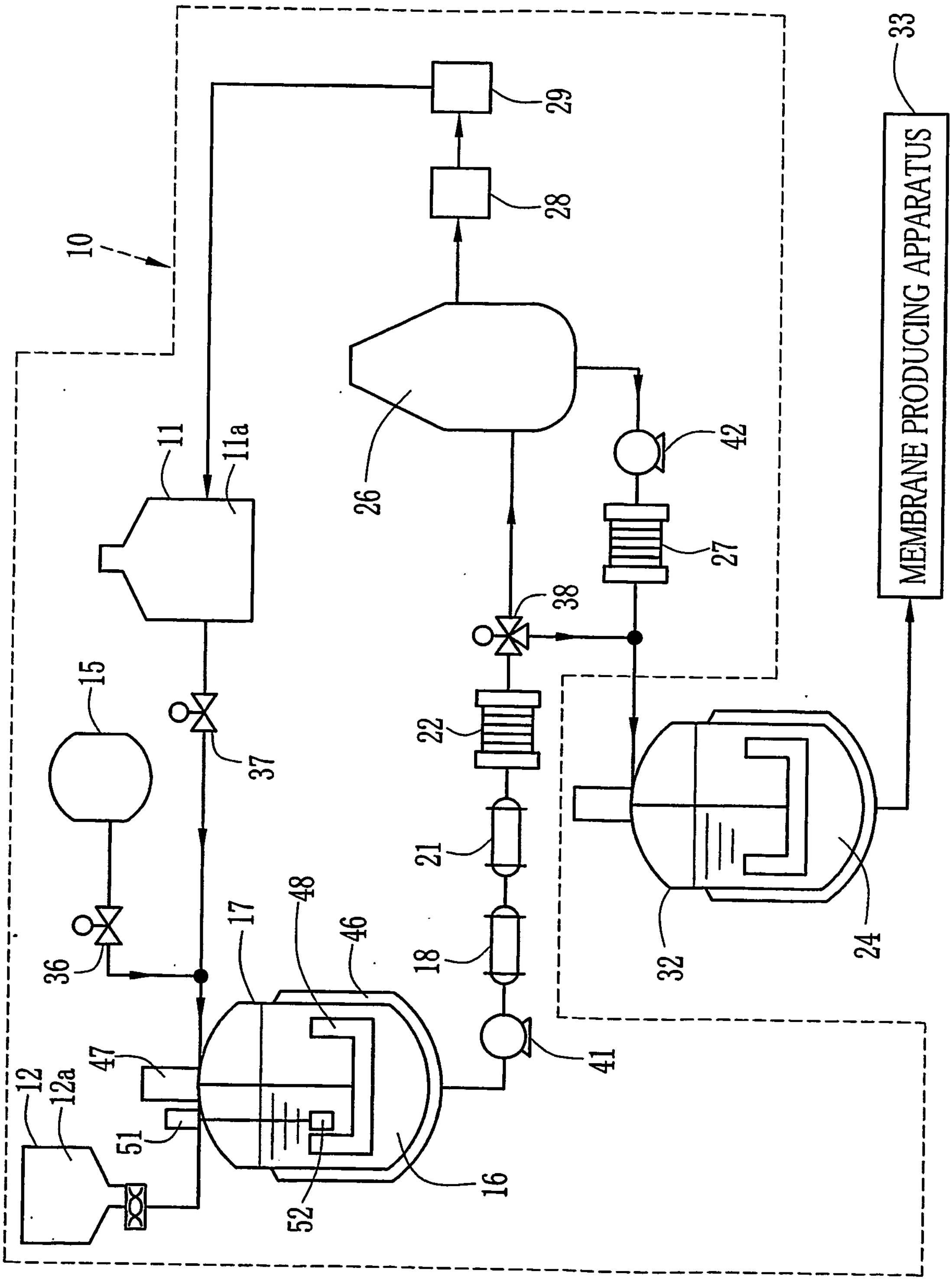

10
11
11a
12
12a
15
16
17
18
21
22
24
26
27
28
29
32
33
36
37
38
41
42
46
47
48
51
52
MEMBRANE PRODUCING APPARATUS

FIG.2

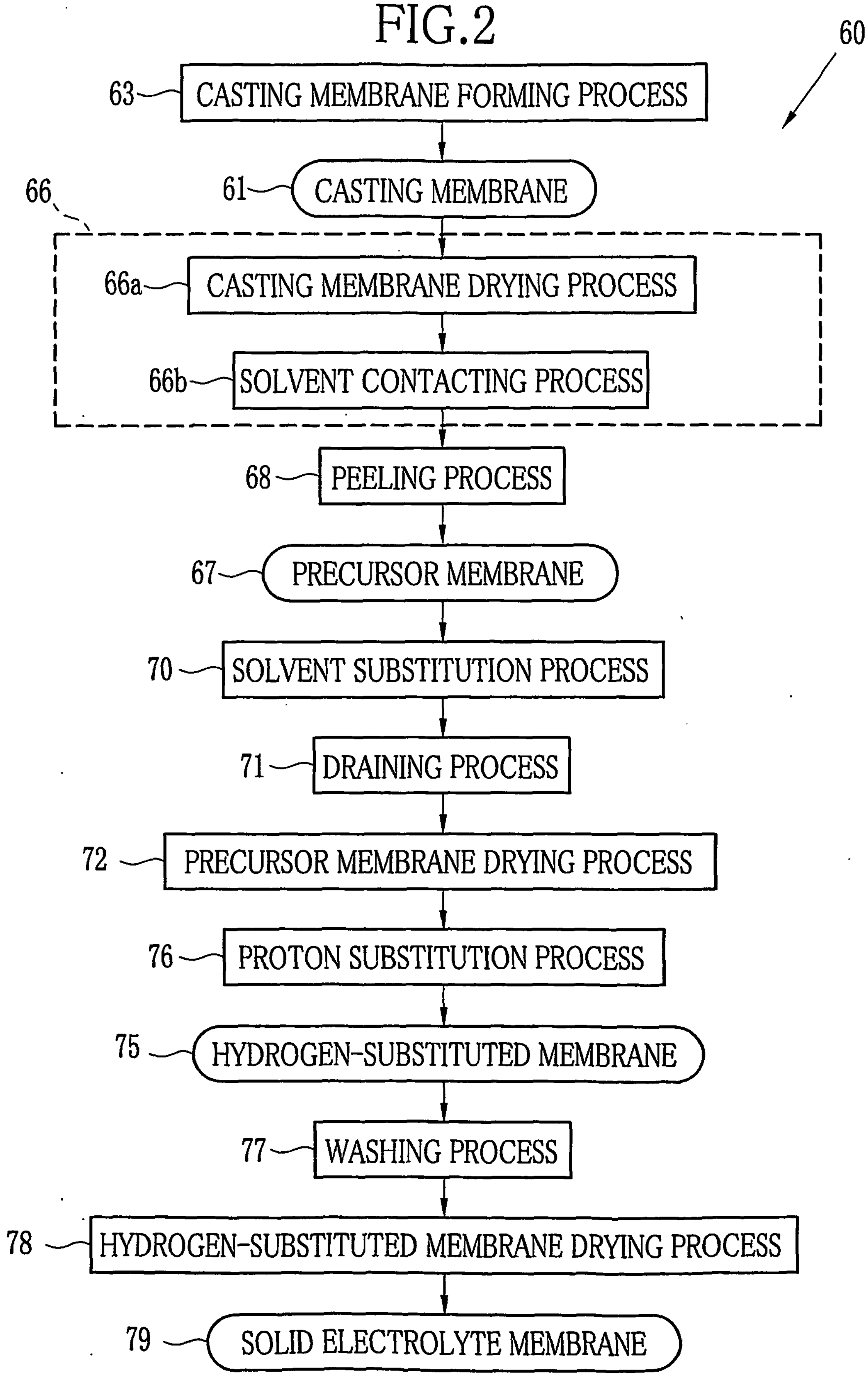
60
63 CASTING MEMBRANE FORMING PROCESS
61 CASTING MEMBRANE
66
66a CASTING MEMBRANE DRYING PROCESS
66b SOLVENT CONTACTING PROCESS
68 PEELING PROCESS
67 PRECURSOR MEMBRANE
70 SOLVENT SUBSTITUTION PROCESS
71 DRAINING PROCESS
72 PRECURSOR MEMBRANE DRYING PROCESS
76 PROTON SUBSTITUTION PROCESS
75 HYDROGEN-SUBSTITUTED MEMBRANE
77 WASHING PROCESS
78 HYDROGEN-SUBSTITUTED MEMBRANE DRYING PROCESS
79 SOLID ELECTROLYTE MEMBRANE

FIG.3

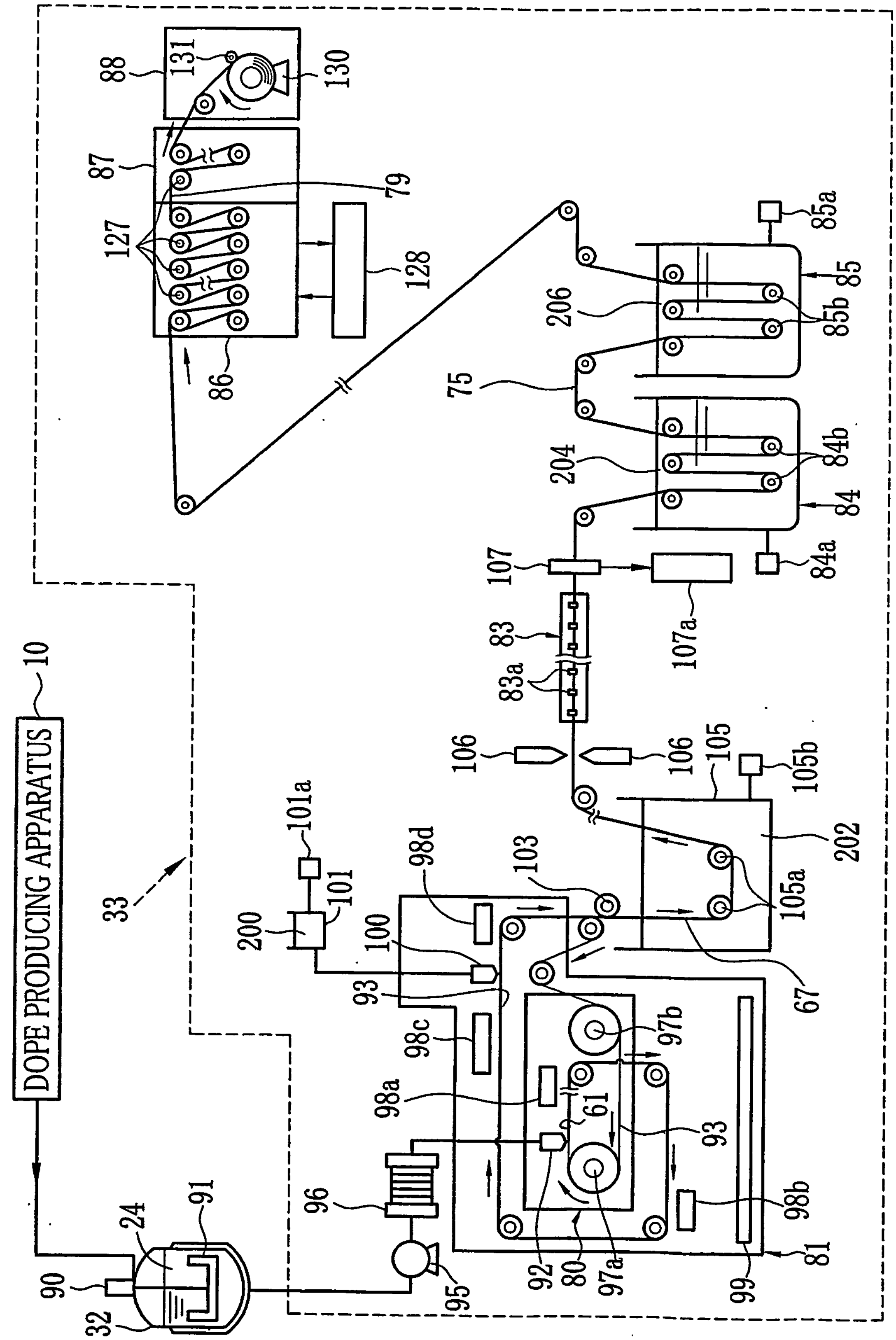
DOPE PRODUCING APPARATUS
10
33
88
131
130
87
79
127
128
86
75
206
85
85a
85b
204
84
84a
84b
107
107a
83
83a
106
105
105a
105b
202
101a
101
200
98d
103
100
93
98c
98a
61
97b
67
96
92
80
97a
98b
99
81
90
24
91
32
95

FIG. 4

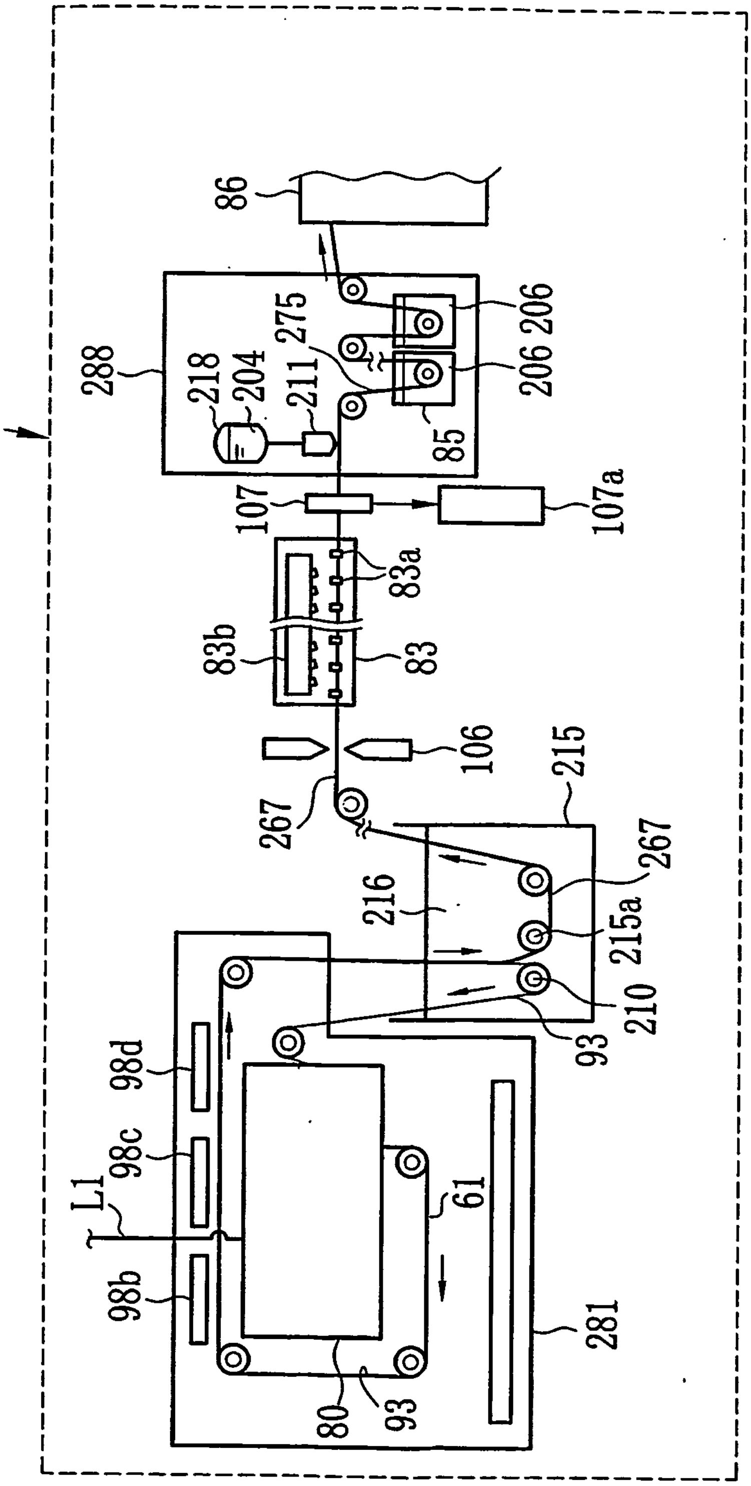
233
86
288
218
204
211
275
206
206
206
85
107
107a
83a
83b
83
106
215
267
216
215a
267
210
93
98d
98c
98b
L1
61
281
80
93

FIG.5

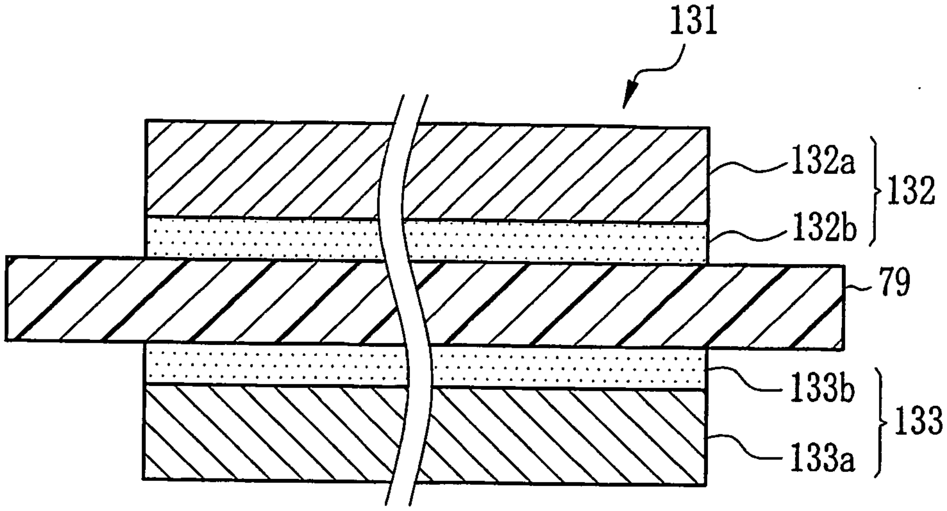
131
132a
132
132b
79
133b
133
133a

FIG.6

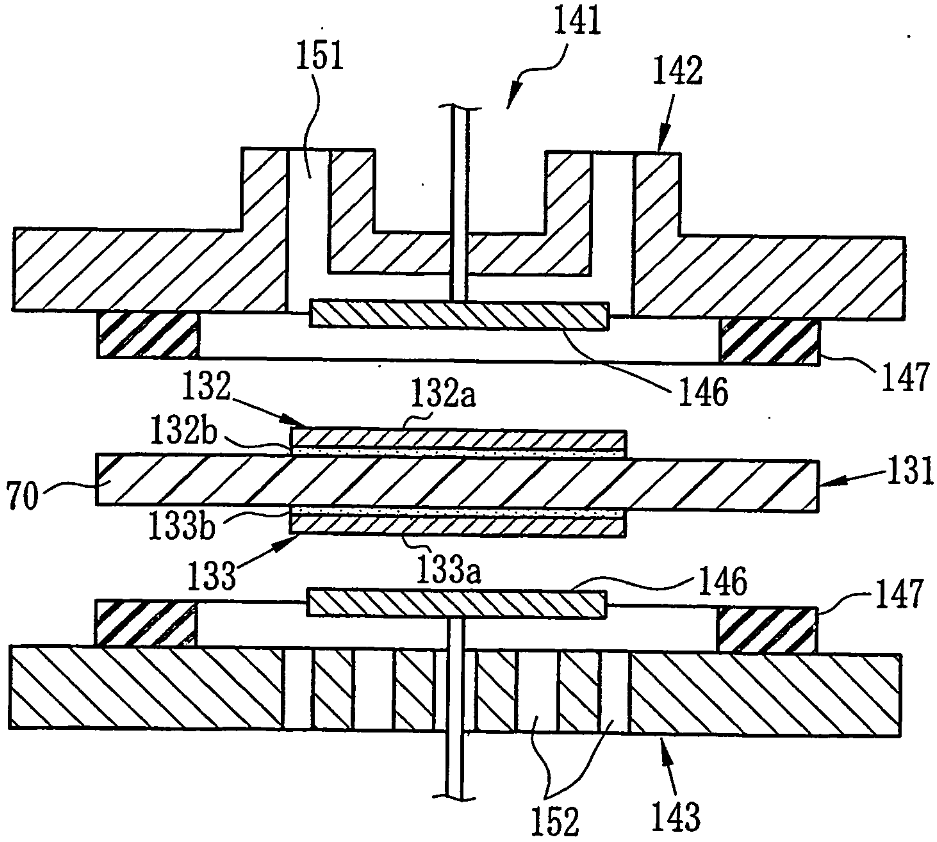
141
151
142
146
147
132
132a
132b
70
131
133b
133
133a
146
147
152
143

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 9320617 A
- JP 2001307752 A
- JP 2002231270 A
- JP 2004079378 A
- JP 2004131530 A
- JP 2005146018 A
- JP 2005104148 A
- JP 4366137 A
- JP 6231779 A
- JP 6342665 A
- JP 5174856 A
- JP 6111834 A
- JP 6049302 A
- JP 2004010677 A
- JP 2004345997 A
- JP 2005015541 A
- JP 2002110174 A
- JP 2003100317 A
- JP 2003055457 A
- JP 9245818 A
- JP 2003257451 A
- JP 2002105200 A
- WO 9742253 A
- JP 2000510511 A
- JP 8053614 A
- JP 10101873 A
- JP 11114430 A
- JP 2003151346 A
- JP 10312815 A
- JP 2000231938 A
- JP 2001307545 A
- JP 2003317748 A
- JP 2004063430 A
- JP 2004107461 A
- JP 2003178777 A
- JP 2004217931 A
- JP 7135003 A
- JP 8020716 A
- JP 9251857 A
- JP 2003288916 A
- JP 2003317539 A

### Non-patent literature cited in the description

- *Journal of Applied Polymer Science,* 1988, vol. 36, 1753-1767
- All about coating. Kako Gijutsu Kenkyukai, 1999
- *Journal of the Electrochemical Society,* 1996, vol. 143 (4), 1254-1259